# EUROPÄISCHE PATENTANMELDUNG

(11) **EP 4 099 272 A1**
(43) Veröffentlichungstag der Anmeldung: **07.12.2022**
(21) Anmeldenummer: 21198043.8
(22) Anmeldetag: 21.09.2021
(51) Int. Cl.: G06T 11/00

(54) **MIKROSKOPIESYSTEM UND VERFAHREN ZUM ERZEUGEN STILISIERTER KONTRASTBILDER**

(30) Priorität: 02.06.2021 DE 102021114287; 02.06.2021 DE 102021114290
(71) Anmelder: Carl Zeiss Microscopy GmbH, 07745 Jena (DE)
(72) Erfinder: FREYTAG, Alexander, 99092 Erfurt (DE); EIBL, Matthias, 07743 Jena (DE)
(74) Vertreter: Ridderbusch, Oliver

(57) **Zusammenfassung**

Ein computerimplementiertes Verfahren erzeugt stilisierte Kontrastbilder (40) aus Mikroskopbildern (20) mit Hilfe eines Bildverarbeitungsmodells (M). Zunächst werden in einem Training (15) Modellparameter des Bildverarbeitungsmodells (M) anhand von Trainingsdaten (T) angepasst. Die Trainingsdaten (T) umfassen Mikroskopbilder (20) als Eingabedaten und Kontrastbilder (50) als Zieldaten, wobei die Mikroskopbilder (20) und die Kontrastbilder (50) durch verschiedene Mikroskopietechniken erzeugt sind. Ein Trainingszustand (M2) des Bildverarbeitungsmodells (M) wird ausgewählt, welcher nach mehreren Trainingsschritten (S) und vor einer Konvergenz (C) oder einem globalen Optimum eines Trainingsverlaufs (V) erreicht ist und eine detailreduzierte Nachbildung eines Kontrastbildes (50) ermöglicht. Das Bildverarbeitungsmodell (M) in dem ausgewählten Trainingszustand (M2) wird verwendet, um aus einem eingegebenen Mikroskopbild (20) ein stilisiertes Kontrastbild (40) zu erzeugen.

## Beschreibung

Die vorliegende Patentanmeldung beansprucht die Prioritäten der deutschen Patentanmeldungen DE 10 2021 114 287.3 und DE 10 2021 114 290.3, die beide am 02. Juni 2021 eingereicht wurden.

### TECHNISCHES GEBIET

Die vorliegende Offenbarung bezieht sich auf ein Mikroskopiesystem und ein computerimplementiertes Verfahren zum Erzeugen stilisierter Kontrastbilder.

### HINTERGRUND

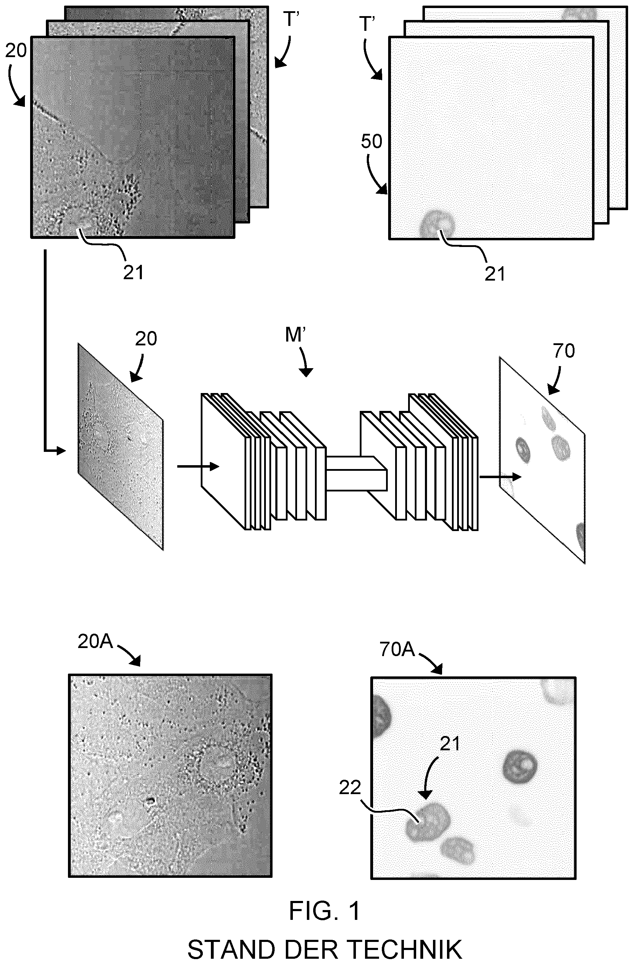

In modernen Mikroskopiesystemen kommt einer automatischen Verarbeitung aufgenommener Bilder eine zunehmend wichtige Rolle zu. Ein Beispiel ist die virtuelle Einfärbung (englisch: virtual staining), durch welche bestimmte Probenstrukturen lokalisiert und verstärkt bzw. besser kenntlich dargestellt werden. Dies erfolgt typischerweise durch maschinell gelernte Modelle anhand von Trainingsdaten, wie näher mit Bezug auf FIG. 1 erläutert wird. FIG. 1 zeigt mehrere Mikroskopbilder 20, die mit einem bestimmten Kontrastverfahren (z.B. als Phasenkontrastbilder) aufgenommen sind. Im dargestellten Fall wurden mit einem Mikroskop zugehörige Fluoreszenzbilder aufgenommen, welche ein Beispiel allgemeiner Kontrastbilder 50 sind. Kontrastbilder 50 sollen vorliegend als Bilder verstanden werden, die mit einem anderen Kontrastverfahren aufgenommen wurden als Mikroskopbilder 20. Eine Probenstruktur 21, z.B. eine biologische Zelle, ist im Mikroskopbild 20 nur schwer erkenntlich, während sich im Kontrastbild 50 die Probenstruktur 21 deutlicher von einem übrigen Bildhintergrund abhebt. Beispielsweise kann in einem Fluoreszenzbild eine Fluoreszenz des Farbstoffs DAPI aufgezeichnet werden, welcher sich an DNA anlagert und daher Zellkerne besonders gut kenntlich machen kann. Die Mikroskopbilder 20 und die zugehörigen Kontrastbilder 50 werden als Trainingsdaten T' für ein Modell M' verwendet. Dabei dienen die Mikroskopbilder 20 als Eingabedaten. Ein Ausgabebild des Modells M' soll ein berechnetes Kontrastbild 70 sein, das möglichst mit dem zugehörigen Kontrastbild 50 übereinstimmen soll. Modellparameter des Modells M' werden zu diesem Zweck iterativ angepasst. Nach Abschluss des Trainings kann das Modell M' aus einem eingegebenen Mikroskopbild 20A, zu welchem kein aufgenommenes Kontrastbild vorliegt, ein berechnetes Kontrastbild 70A erzeugen. Dies kann probenschonend erfolgen, da für die Erzeugung eines solchen virtuell eingefärbten Bildes nicht die Probenbelastung nötig ist, die mit einer Fluoreszenzuntersuchung oder anderen Färbetechniken einhergeht. Außerdem kann der für die Aufnahme eines Kontrastbildes, z.B. eines Fluoreszenzbildes, notwendige apparative Aufwand entfallen, oder es kann auf eine eventuell mit dem Kontrastverfahren verbundene Probenpräparation verzichtet werden. Verwendung findet ein berechnetes Kontrastbild 70A unter anderem in der Probennavigation: Basierend auf dem berechneten Kontrastbild 70A kann ein Nutzer oder eine nachfolgende automatische Bildanalyse einen Probenbereich auswählen, welcher näher untersucht werden soll. Im Vergleich zum Mikroskopbild 20A ist im berechneten Kontrastbild 70A von Vorteil, dass Probenstrukturen 21 stärker zur Geltung kommen, während andere Strukturen weitgehend ausgeblendet sind. Problematisch ist jedoch, dass durch die virtuelle Einfärbung Probendetails 22, z.B. Organellen oder andere Zellbestandteile, innerhalb der Probenstruktur 21 hinzuhalluziniert werden können. In solchen Fällen wurden vom Modell M' also Probenbestandteile im berechneten Kontrastbild 70A ergänzt, die tatsächlich nicht vorhanden sind. Auch eine präzise angegebene Form der Probenstruktur 21 im berechneten Kontrastbild 70A stimmt nicht immer mit der tatsächlichen Form überein. Nachfolgende Prozesse, wie zum Beispiel eine Navigation, können hierdurch beeinträchtigt sein. Die genannten Probleme können prinzipiell vermindert werden, wenn der Umfang an Trainingsdaten T' erhöht wird. Werden aber neuartige Mikroskopbilder verarbeitet, die sich stärker von einer statistischen Verteilung der Trainingsdaten T' unterscheiden, können auch durch einen erhöhten Umfang an Trainingsdaten T' Fehler nicht zufriedenstellend vermieden werden.

Verfahren zum virtuellen Einfärben von Proben sind z.B. in EP 3 553 165 A1, US 9,786,050 B2 und US 10,013,760 B2 beschrieben sowie in:
Christiansen, Eric, et al., "In Silico Labeling: Predicting Fluorescent Labels in Unlabeled Images", 2018, Cell 173, 792-803, 19.04.2018, Elsevier, doi: https://doi.org/10.1016/j.cell.2018.03.040
Ounkomol, Chawin, et al., "Label-free prediction of three-dimensional fluorescence images from transmitted light microscopy", bioRxiv preprint, 23.05.2018, https://doi.org/10.1101/289504
Alvarenga, Lauren, Olympus Discovery Blog, 2. September 2020, "A Video Introduction to Label-Free Nucleus Detection with TruAI Technology", https://www.olympus-lifescience.com/en/discovery/a-video-introduction-tolabel-free-nucleus-detection-with-truai-technology/

Ein möglicher Aufbau eines Netzes, welches mit Hilfe konditioneller generativer gegnerischer Netzwerke (conditional generative adversarial networks) aus einem Eingabebild ein Ausgabebild berechnet, ist bekannt aus:
Isola, Phillip, et al., "Image-to-Image Translation with Conditional Adversarial Networks", arXiv:1611.07004v3 [cs.CV] 26 Nov. 2018

In WO 2019/160580 A1 wird beschrieben, ungefärbte Bilder und örtlich hierzu registrierte gefärbte Bilder aufzunehmen. Aus den gefärbten Bildern werden Masken abgeleitet und sodann wird eine Abbildung von einem ungefärbten Bild auf eine Maske gelernt.

Als Hintergrundinformation für eine mögliche Architektur eines bildverarbeitenden Modells wird verwiesen auf: Ronneberger, Olaf, et al., "U-Net: Convolutional Networks for Biomedical Image Segmentation", arXiv:1505.04597v1, 18.05.2015.

Als Hintergrundinformation zur Regularisierung eines Lernvorgangs durch ein frühzeitiges Stoppen (Early Stopping) des Lernvorgangs wird verwiesen auf:
lan Goodfellow, Yoshua Bengio, Aaron Courville: "Deep Learning", Kapitel 7.8: "Early Stopping", 2016, MIT Press, www.deeplearningbook.org

Durch eine Regularisierung soll eine Überanpassung des Modells an Trainingsdaten vermieden werden. Eine Überanpassung kann z.B. durch Vergleich einer Lernkurve, die auf Trainingsdaten beruht, und einer Lernkurve, die auf Validierungsdaten beruht, erkannt werden. Trainingsdaten bezeichnen diejenigen Eingabedaten und zugehörige vorgegebene Zieldaten / ground truth Daten, welche zum Anpassen der Modellparameter im Training verwendet wurden. Validierungsdaten bezeichnen hingegeben Eingabedaten und zugehörige Zieldaten, welche nicht zum Anpassen der Modellparameter verwendet wurden, sondern dem Überprüfen einer Qualität des Modells dienen. Die Lernkurven können einen Loss angeben, das heißt eine Abweichung zwischen Modellvorhersagen und vorgegebenen Zieldaten. Im Fall einer Überanpassung zeigt die Lernkurve, die auf den Trainingsdaten beruht, eine weitere Abnahme des Loss, während die Lernkurve, die auf den Validierungsdaten beruht, zunächst eine Abnahme und dann eine Zunahme des Loss zeigt. Die Zunahme des Loss ist durch die Überanpassung bedingt, da das Modell lernt, allein die Zieldaten der Trainingsdaten präzise nachzubilden, ohne auf andere Fälle verallgemeinern zu können. In diesen Fällen hat ein Modell im Trainingszustand des globalen Minimums der Lernkurve, die auf den Validierungsdaten beruht, eine bessere Qualität als ein weitertrainiertes Modell. Durch ein Early Stopping als Regularisierungsmaßnahme wird der Trainingszustand beim globalen Minimum der Lernkurve, die auf den Validierungsdaten beruht, ausgewählt, womit eine Überanpassung vermieden wird.

### KURZFASSUNG

Als eine **Aufgabe** der Erfindung kann angesehen werden, ein Mikroskopiesystem und ein Verfahren anzugeben, durch welche in möglichst einfacher und zuverlässiger Weise Kontrastbilder bereitgestellt werden können, in denen Probenstrukturen in abstrakter Form hervorgehoben sind, ohne dass den Kontrastbildern genaue Strukturdetails hinzugefügt werden.

Diese Aufgabe wird durch das Mikroskopiesystem mit den Merkmalen des Anspruchs 14 und durch das Verfahren mit den Merkmalen des Anspruchs 1 gelöst.

Ein erfindungsgemäßes computerimplementiertes Verfahren erzeugt stilisierte Kontrastbilder aus Mikroskopbildern mit Hilfe eines Bildverarbeitungsmodells. Zunächst werden in einem Training des Bildverarbeitungsmodells dessen Modellparameter anhand von Trainingsdaten angepasst. Die Trainingsdaten umfassen Mikroskopbilder als Eingabedaten und Kontrastbilder als Zieldaten, wobei die Mikroskopbilder und die Kontrastbilder durch verschiedene Mikroskopietechniken erzeugt sind. Ein Trainingszustand des Bildverarbeitungsmodells wird ausgewählt, welcher nach mehreren Trainingsschritten und vor einer Konvergenz oder einem globalen Optimum eines Trainingsverlaufs erreicht ist und eine detailreduzierte Nachbildung eines Kontrastbildes ermöglicht. Das Bildverarbeitungsmodell wird in dem ausgewählten Trainingszustand verwendet, um aus einem eingegebenen Mikroskopbild ein stilisiertes Kontrastbild zu erzeugen.

Ein Mikroskopiesystem der Erfindung umfasst ein Mikroskop zur Bildaufnahme und eine Recheneinrichtung, die dazu eingerichtet ist, das erfindungsgemäße computerimplementierte Verfahren auszuführen.

Ein erfindungsgemäßes Computerprogramm umfasst Befehle, die bei der Ausführung des Programms durch einen Computer diesen veranlassen, das Verfahren der Erfindung auszuführen.

Die Erfindung nutzt, dass in einem Trainingsverlauf eines Bildverarbeitungsmodells zunächst gelernt wird, grobe Strukturen der Mikroskopbilder zu erfassen und im Ausgabebild darzustellen. Erst im weiteren Trainingsverlauf werden Details innerhalb der Strukturen und exakte Strukturformen gelernt und in den Ausgabebildern kenntlich gemacht. Dadurch kommt es zu einem Abschnitt im Trainingsverlauf, in welchem die Existenz und eine Lage grober Strukturen zuverlässig erkannt werden kann, ohne dass Details in stärkerem Umfang vorhergesagt würden. Dieser Abschnitt im Trainingsverlauf eignet sich daher besonders, um detailreduzierte Kontrastbilder zu berechnen, welche aufgrund weitgehend fehlender Texturdetails vorliegend als stilisiert bezeichnet werden. Eine Trainingsdauer kann hierdurch gegebenenfalls wesentlich verringert werden. Gleichzeitig können stilisierte Kontrastbilder für verschiedene nachfolgende Verfahrensschritte vorteilhaft sein.

Die Kontrastbilder, die im Training als Zielbilder vorgegeben werden, unterscheiden sich somit qualitativ von den Bildern (stilisierten Kontrastbildern), die nach dem so beschriebenen Training durch das Bildverarbeitungsmodell erzeugbar sind. In einem stilisierten Kontrastbild sind Probenstrukturen entsprechend dem Kontrastverfahren deutlich kenntlich gemacht, wodurch das stilisierte Kontrastbild für z.B. eine Probennavigation oder ein Zählen dargestellter biologischer Zellen geeignet ist. Durch die Stilisierung werden die zum Stand der Technik beschriebenen Probleme vermieden, insbesondere dass Probendetails hinzuhalluziniert werden oder eine präzise Probenform angegeben wird, die von einer tatsächlichen Probenform abweicht. Daher kann das bei herkömmlichen Methoden des Virtual Staining (Berechnen von Kontrastbildern ohne Stilisierung) verbreitete Problem vermieden werden, dass sehr realistisch aussehende Probendetails dargestellt werden, die jedoch vom Modell hinzuerfunden wurden und tatsächlich nicht vorhanden sind. Gegenüber einer rechenintensiven, aufwändigen Berechnung einer virtuellen Einfärbung mit nachfolgender Detailreduzierung zum Entfernen möglicher hinzuerfundener Probendetails, führt das erfindungsgemäße Verfahren schneller und unter Nutzung geringerer Rechenleistung zum Ziel. Als ein weiterer Vorteil der Stilisierung kann die Nutzerakzeptanz erhöht werden, welche im Fall beinah echt aussehender Kontrastbilder mit ungewisser Sicherheit dargestellter Strukturdetails beeinträchtigt sein kann (Uncanny-Valley Effekt).

Ein anderer Vorteil gegenüber möglichen Vorgehensweisen zum Erzeugen stilisierter Kontrastbilder aus Mikroskopbildern kann darin gesehen werden, dass keine spezielle Anpassung oder Stilisierung der im Training verwendeten Bilder notwendig ist. Auch muss keine spezielle Anpassung einer im Training zu optimierenden Verlustfunktion (loss function) erfolgen. Vielmehr können diejenige Verlustfunktion und/oder diejenigen Trainingsbilder verwendet werden, die auch bei gängigen Methoden zum Lernen eines Virtual Staining Modells eingesetzt werden. Dies reduziert manuelle Vorbereitungsmaßnahmen und erlaubt die Verwendung von zumindest teilweise gleichen Trainingsdaten für verschiedene Zwecke.

### Optionale Gestaltungen

Varianten des erfindungsgemäßen Mikroskopiesystems und des erfindungsgemäßen Verfahrens sind Gegenstand der abhängigen Ansprüche und werden in der folgenden Beschreibung erläutert.

Verschiedene Ausführungsbeispiele betreffen die Vorgehensweise, wie ein Trainingszustand des Bildverarbeitungsmodells während oder nach Abschluss eines Trainingsvorgangs ausgewählt wird. Ein Trainingsvorgang umfasst typischerweise eine große Anzahl an Trainingsschritten, beispielsweise mehrere Tausend oder Zehntausend Schritte. Parameterwerte des Bildverarbeitungsmodells werden in jedem Trainingsschritt verändert, wobei diese Modelländerungen über wenige Trainingsschritte gesehen meist eher moderat sind. Daher sind typischerweise mehrere aufeinanderfolgende Trainingszustände aus dem Trainingsverlauf geeignet, um stilisierte Kontrastbilder zu berechnen. In nachfolgend beschriebenen Vorgehensweisen wird häufig ein bestimmter Trainingszustand ermittelt, beispielsweise als Minimum einer Funktion oder als erster Trainingszustand, der eine vorgegebene Bedingung erfüllt bzw. nicht mehr erfüllt. In diesen Fällen kann optional anstelle des berechneten Trainingszustandes auch ein Trainingszustand, der wenige Trainingsschritte entfernt ist, ausgewählt werden, um stilisierte Kontrastbilder zu berechnen. Konkret kann in Abwandlungen nachfolgender Ausführungen anstelle des beschriebenen ausgewählten Trainingszustands, der nach einer Anzahl von x Trainingsschritten erreicht ist, auch ein anderer Trainingszustand ausgewählt werden, der nach einer Anzahl von y Trainingsschritten erreicht ist, wobei y um höchstens 10% oder insbesondere höchstens 5% von x abweicht, also 0,95x≤y≤1,05x. Anstelle eines Trainingszustands, der beispielsweise nach x = 4660 Trainingsschritten ausgewählt würde, kann demnach auch ein Trainingszustand innerhalb von 4427 bis 4893 Trainingsschritten ausgewählt werden. Weitere Varianten ergeben sich, wenn für die Anzahl an y Trainingsschritten gilt: 0,90x≤y≤x oder 0,95x≤y≤x, womit allein einer der Trainingszustände kurz vor, aber nicht nach, dem berechneten Trainingszustand ausgewählt wird. Nachfolgend wird auch auf Bereiche um einen bestimmten Punkt eines Trainingsverlaufs eingegangen, beispielsweise ein Bereich um ein Minimum einer Lernkurve. In solchen Fällen kann ein Bereich als eine Abweichung von höchstens 10% oder höchstens 5% von der Anzahl an Trainingsschritten des angegebenen Punkts (z.B. des Minimums der Lernkurve) definiert sein, wobei wiederum der angegebene Punkt optional die Obergrenze des Bereichs bilden kann.

### Ausgabebilder nach Stilisierungskriterien bewerten

Zum Auswählen des Trainingszustands kann eine Bewertung von Ausgabebildern hinsichtlich vorgegebener Stilisierungskriterien erfolgen, wobei die Ausgabebilder vom Bildverarbeitungsmodell in verschiedenen Trainingszuständen erzeugt werden.

Durch die Bewertung kann ermittelt werden, in welchem Trainingszustand das Bildverarbeitungsmodell in der Lage ist, detailreduzierte Kontrastbilder auszugeben. Im weiteren Trainingsverlauf werden berechnete Ausgabebilder zunehmend realistisch, das heißt den im Training vorgegebenen Kontrastbildern immer ähnlicher. Daher kann durch eine fortlaufende Bewertung von Ausgabebildern über das Training hinweg ermittelt werden, ab welcher Anzahl an Trainingsschritten berechnete Ausgabebilder nicht mehr als stilisiert einzustufen sind.

Die Bewertung kann bereits während des Trainings erfolgen und es kann vorgesehen sein, dass das Training beendet wird, sobald die Bewertung ergibt, dass vorgegebene Stilisierungskriterien nicht länger erfüllt sind bzw. ein geeigneter Trainingszustand ermittelt wurde.

Die zu bewertenden Ausgabebilder können aus Mikroskopbildern der Trainingsdaten oder auch aus Mikroskopbildern der Validierungsdaten berechnet werden.

Die Stilisierungskriterien können eine Helligkeitsverteilung von Pixeln der Ausgabebilder betreffen. In diesem Fall kann durch die Stilisierungskriterien beispielsweise unterschieden werden, ob die Helligkeitsverteilung innerhalb einer vorgegebenen Aufspreizung bleibt, oder ob eine vorgegebene Aufspreizung überschritten wird. Die Helligkeitsverteilung kann ein Grauwerthistogramm sein, welches die Häufigkeit aller in einem Ausgabebild vorkommenden Grauwerte angibt. Eine Aufspreizung oder Breite der Helligkeitsverteilung kann einen Bereich derjenigen Grauwerte angeben, welche mindestens mit einer vorgegebenen Häufigkeit vorkommen. Wie auch später mit Bezug auf Figurenbeispiele anschaulicher erläutert, ist eine Helligkeitsverteilung von Pixeln der Ausgabebilder in frühen Trainingszuständen stärker beschränkt. In diesen frühen Trainingszuständen lernt das Modell, die Lage und durchschnittliche Helligkeit von Objekten in den Mikroskopbildern nachzubilden. Erst im späteren Trainingsverlauf lernt das Modell, Details der Objekte durch eine größere Variation verwendeter Helligkeitswerte nachzubilden. Daher kann die Aufspreizung von Grauwerten als Kriterium dienen, ab wann im Trainingsverlauf die Nachbildung von Objektdetails gelernt wird. Es kann nun der letzte Trainingszustand des Trainingsverlaufs ausgewählt werden, bei dem die Stilisierungskriterien noch erfüllt sind. Allgemeiner kann auch ein Trainingszustand ausgewählt werden, der dem genannten letzten Trainingszustand um höchstens 10% oder höchstens 5% der durchgeführten Trainingsschritte vorangeht. Die obige Ausführung kann im Fall von Farbbildern auf die entsprechenden Farbkanäle erweitert sein, womit anstelle von Grauwerten Helligkeitswerte der jeweiligen Farbkanäle genutzt werden. Helligkeitsverteilungen mehrerer Ausgabebilder desselben Trainingszustands können zu einer einzigen Helligkeitsverteilung zusammengefasst werden. Zusätzliche Verarbeitungsschritte sind möglich, beispielsweise können Wertebereiche der Bildkanäle vor der Bestimmung der Helligkeitsverteilung prozessiert werden, insbesondere durch Logarithmieren oder eine Gamma-Korrektur. Zudem können Farbkanäle eines Bildes zunächst in eine andere Darstellung transformiert werden, beispielsweise von einer RGB-Darstellung (Rot-Grün-Blau-Darstellung) in den Lab-Farbraum.

Die Aufspreizung der Helligkeitsverteilung eines/mehrerer Ausgabebilder muss nicht zwingend mit einem als konstant vorgegebenen Wert einer Aufspreizung verglichen werden. Vielmehr kann auch ein Vergleich mit einer Referenz-Aufspreizung erfolgen, welche an Helligkeitsverteilung(en) von einem/mehreren Zielbildern ermittelt wird. Das Stilisierungskriterium bewertet also, wie stark ein Unterschied zwischen den Aufspreizungen der Helligkeitsverteilungen von Ausgabebildern und zugehörigen Zielbildern ist. Das Stilisierungskriterium ist erfüllt, solange dieser Unterschied einen Grenzwert überschreitet.

In ähnlicher Weise können die Stilisierungskriterien auch einen Unterschied zwischen einer Helligkeitsverteilung von Pixeln eines Ausgabebildes zu einer Helligkeitsverteilung von Pixeln eines zugehörigen Zielbildes bewerten. Es wird also die Helligkeitsverteilung eines "ground truth"-Bildes als Referenz genutzt. Der Unterschied wird z.B. mit einem Schwellwert verglichen. Ist der Unterschied kleiner als der Schwellwert, ähneln sich die Helligkeitsverteilungen stark und das Stilisierungskriterium ist nicht mehr erfüllt. Dieses Vorgehen ist insbesondere geeignet, wenn Zielbilder viele sehr dunkle und viele sehr helle Bereiche aufweisen, weil in diesem Fall bereits früh im Training die Ausgabebilder eine ähnlich große Aufspreizung der Helligkeitsverteilung haben könnten wie die Zielbilder, aber dennoch deutliche Unterschiede in den Helligkeitsverteilungen vorlägen.

Alternativ oder zusätzlich können die Stilisierungskriterien auch eine Aufweitung von Fourier-Spektren von Ausgabebildern betreffen. Die Stilisierungskriterien unterscheiden in diesem Fall, ob Signalstärken der Fourier-Spektren oberhalb eines vorgegebenen Frequenzbereichs vorgegebene Signalstärkenobergrenzen einhalten oder überschreiten. Ein Fourier-Spektrum (Amplitudenspektrum sowie ein hier nicht weiter benötigtes Phasenspektrum) werden durch eine Fouriertransformation eines Ausgabebildes erhalten, insbesondere durch eine zwei-dimensionale diskrete Fouriertransformation. Das Fourier-Spektrum gibt an, durch welche räumlichen Frequenzen mit welcher jeweiligen Amplitude ein Ausgabebild darstellbar ist. Die Darstellung von Bilddetails wie beispielsweise die innere Struktur biologischer Zellen erfordert höhere Bildfrequenzen. Über den Trainingsverlauf verändern sich daher die Signalstärken verschiedener Frequenzbereiche. Im späteren Trainingsverlauf kommt es zu einer stärkeren Zunahme hochfrequenter Bildanteile, durch welche in den Ausgabebildern Probendetails dargestellt werden. Zu Beginn des Trainingsverlaufs sind hingegen die Fourier-Spektren der berechneten Ausgabebilder stärker auf einen Bereich niedriger Frequenzen beschränkt. Daher können für ein Stilisierungskriterium die höherfrequenten Bildanteile betrachtet werden, das heißt die Signalstärken der Fourier-Spektren oberhalb eines vorgegebenen Frequenzbereichs. Solange diese Signalstärken eine vorgegebene Signalstärkenobergrenze einhalten, kann auf eine stilisierte Darstellung geschlossen werden. Wird hingegen die Obergrenze überschritten, das heißt sind höherfrequente Bildanteile stärker vorhanden, dann bildet das Modell mehr Details nach und es liegt keine Stilisierung mehr vor.

Eine Grenze des vorgegebenen Frequenzbereichs kann unabhängig von den verwendeten Trainingsdaten konstant vorgegeben sein. Alternativ wird die Grenze anhand von Kontrastbildern (Zielbildern) der Trainingsdaten festgelegt. Beispielsweise haben Objekte wie Zellkerne oder gesamte Zellen eine bestimmte Größe und Form, durch welche bestimmte Frequenzen im Fourier-Spektrum verstärkt vorkommen. Als Grenze kann z.B. eine Frequenz festgelegt werden, die größer als ein inverser Durchmesser in Pixeln der Zellen oder Zellkerne ist. Frequenzen oberhalb dieser Grenze dienen stärker der Darstellung innerer Strukturen der Zellen. Daher ist die Grenze geeignet für ein Stilisierungskriterium, durch welches unterschieden wird, ob in Ausgabebildern Strukturdetails innerhalb von Zellen nachgebildet werden. Die Wahl der Grenze des vorgegebenen Frequenzbereichs kann auch durch Vorwissen über dargestellte Objekte bzw. durch Kontextwissen über die verwendeten Mikroskop- und/oder Kontrastbilder festgelegt werden. Beispielsweise kann eine Kenntnis der abgebildeten Zellarten, insbesondere eine Kenntnis einer Form und Größe in Pixeln, verwendet werden. Dieses Wissen muss nicht zwingend aus den im Training verwendeten Bildern stammen.

In ähnlicher Form kann als Stilisierungskriterium auch ein Unterschied zwischen Fourier-Spektren von Ausgabebildern und Fourier-Spektren der zugehörigen Kontrast-/Zielbilder erfolgen. Der Unterschied verringert sich deutlich, wenn das Bildverarbeitungsmodell lernt, Strukturdetails nachzubilden. Daher werden durch das Stilisierungskriterium Ausgabebilder solange als stilisiert eingestuft, wie ein Unterschied zwischen ihren Fourier-Spektren und den Fourier-Spektren der zugehörigen Zielbilder kleiner als ein vorgegebener Grenzwert ist. Für einen Vergleich der Fourier-Spektren können beispielsweise die Amplituden von Frequenzen des gleichen Betrags (aber unterschiedlicher Richtung) eines Fourier-Spektrums addiert werden, das heißt in üblichen Darstellungen eines Fourier-Spektrums, dass die Pixelwerte von Pixeln, die gleich weit vom Bildmittelpunkt des Fourier-Spektrums entfernt sind, addiert werden. Der Bildmittelpunkt gibt hier eine minimale Frequenz von null an. Anschließend können die Unterschiede zu einem in analoger Weise ausgewerteten Fourier-Spektrum ermittelt und zu einem Wert zusammengefasst oder zusammenaddiert werden, welcher sodann mit dem vorgegebenen Grenzwert verglichen wird.

Es kann demnach ermittelt werden, ab welchem Trainingszustand die Stilisierungskriterien (z.B. hinsichtlich der Helligkeitsverteilung und/oder der Fourier-Spektren) nicht länger erfüllt sind, und dieser Trainingszustand oder ein vorausgehender Trainingszustand wird ausgewählt und nach Beendigung des Trainings zum Berechnen stilisierter Kontrastbilder aus Mikroskopbildern, die nicht Teil der Trainingsdaten waren, genutzt.

Der Begriff "Stilisierungskriterien" soll hinsichtlich einer Anzahl an Kriterien nicht beschränkend verstanden werden. Je nach mathematischer Formulierung können die Stilisierungskriterien auch durch eine einzige Bedingung ausgedrückt werden.

Neben den genannten Beispielen an Stilisierungskriterien kann auch in prinzipiell beliebiger Weise ein Detailgrad der Ausgabebilder ermittelt und mit einem vorgegebenen Schwellwert für einen Detailgrad verglichen werden. Dabei wird der Schwellwert niedriger festgesetzt als ein Detailgrad der im Training verwendeten Kontrastbilder. Der Detailgrad kann z.B. durch Helligkeitsunterschiede zwischen benachbarten Pixeln erfasst werden, oder durch ein hierzu trainiertes Modell. Das Stilisierungskriterium ist erfüllt, solange ein Detailgrad der vom Bildverarbeitungsmodell erzeugten Ausgabebilder unter dem vorgegebenen Schwellwert liegt.

### Trainingsabbruch sobald Stilisierungskriterien nicht mehr erfüllt sind

Optional wird ein Training des Bildverarbeitungsmodells beendet, sobald die vorgegebenen Stilisierungskriterien nicht länger erfüllt sind. In diesem Fall wird ein Trainingszustand im Bereich des Trainingsendes ausgewählt.

Hierdurch werden lange Trainingszeiten des Bildverarbeitungsmodells vermieden. Gerade bei sehr umfangreichen Trainingsdaten kann die Dauer und/oder die nötige Rechenleistung bedeutsam sein.

### Modellauswahl anhand einer Lernkurve

Für eine Modellauswahl kann auch eine Lernkurve ausgewertet werden. Eine Lernkurve (englisch: Training Curve oder Learning Curve) gibt ein Gütemaß eines jeweiligen Trainingszustands an, z.B. einen an Trainings- und/oder Validierungsdaten berechneten Loss. Als Loss wird ein Ergebnis einer Verlustfunktion bezeichnet, die im Training minimiert wird. Beispielsweise kann die negative Log-Likelihood-Funktion minimiert werden. Anstelle des Loss kann auch ein anderes Gütemaß für die Lernkurve genutzt werden, z.B. eine Summe oder ein Mittelwert der pixelweisen Unterschiede (oder der quadrierten Unterschiede) zwischen Ausgabebildern und vorgegebenen Kontrastbildern der Trainings- oder Validierungsdaten. Als Gütemaß kann auch ein Struktur-Ähnlichkeits-Index (englisch: Structured-Similarity-Index (SSIM)) oder ein Multiskalen-Struktur-Ähnlichkeits-Index (englisch: Multi-Scale- SSIM, MS-SSIM)) verwendet werden. Hierbei wird ein Unterschied zwischen Bildern anhand einer Bildluminanz, einem Bildkontrast und dargestellter Struktur bewertet, wobei diese drei Eigenschaften zu einer Gesamtbewertung zusammengefasst werden. Es können jeweils Ausschnitte der Bilder hinsichtlich dieser Eigenschaften miteinander verglichen werden. Bei MS-SSIM erfolgen diese Bewertungen zusätzlich bei verschiedenen Skalen bzw. verschiedenen auflösungsreduzierten Kopien der Bilder, wobei wiederum die Bewertungen zu verschiedenen Skalen zu einer Gesamtbewertung zusammengefasst werden. Ein Verlauf des Gütemaßes über das Training hinweg wird als Lernkurve bezeichnet.

Eine Lernkurve kann prinzipiell nach Abschluss des Trainings gebildet werden, wobei aber auch während des Trainings eine Lernkurve erfasst werden kann. Abhängig von einem Verlauf der Lernkurve wird ein Trainingszustand ausgewählt, an dem noch keine Konvergenz und kein globales Optimum der Lernkurve erreicht ist.

In verschiedenen Varianten erfolgt eine Auswertung an einer geglätteten Lernkurve, welche beispielsweise aus der Lernkurve durch Mittelung mehrerer aufeinanderfolgender Werte berechnet wird. Insbesondere kann eine Anzahl zwischen 5 und 30 aufeinanderfolgenden Werten des Gütemaßes gemittelt werden, um die geglättete Lernkurve zu berechnen. Alternativ ist eine exponentielle Glättung möglich, bei welcher frühere Werte der Lernkurve exponentiell umso schwächer gewichtet werden, je weiter sie zurückliegen.

Anhand der geglätteten Lernkurve kann derjenige Trainingszustand ermittelt und ausgewählt werden, welcher auf der geglätteten Lernkurve einem Punkt im Bereich eines ersten lokalen Optimums entspricht. Optional kann vorgegeben sein, dass es sich um das erste lokale Optimum nach einer vorbestimmten Mindestanzahl an Trainingsschritten handelt. Dass dem ersten lokalen Optimum eine besondere Relevanz im Lernvorgang zukommt, wurde in Vorarbeiten der Erfindung beobachtet: Ein lokales Minimum wird verhältnismäßig früh erreicht, wenn ein Modell gelernt wurde, welches ein Vorhandensein und eine Lage dargestellter Objekte (z.B. biologischer Zellen) zuverlässig berechnen kann, wobei das Modell aber noch keine Texturdetails der Objekte vorhersagt. Bei diesem lokalen Minimum kann das Modell daher detailreduzierte Nachbildungen von Kontrastbildern erzeugen. In einer darauffolgenden Phase im Lernvorgang versucht das Modell, Details innerhalb von dargestellten Objekten (z.B. Strukturen innerhalb biologischer Zellen, zusätzlich zu Zellkernen) zu berechnen. In dieser Phase steigt zunächst der Loss, da durch den Versuch Details nachzubilden das übersichtsartige Auffinden und Lokalisieren großer Objekte leidet. Erst in einer anschließenden Trainingsphase sinkt der Loss wieder und das Modell bildet realistisch erscheinende Objekte in weitgehend korrekter Lage nach. Daher eignet sich ein Trainingszustand im Bereich des ersten lokalen Minimums der Lernkurve besonders, um als Bildverarbeitungsmodell zum Erzeugen stilisierter Kontrastbilder zu dienen.

Je nach Glättung der Lernkurve kann es anstelle eines einzigen stark ausgeprägten lokalen Minimums auch mehrere kurz aufeinanderfolgende Minima geben, bevor es zu einem stärkeren Anstieg des Loss-Wertes kommt. Allgemeiner formuliert kann daher auch ein Trainingszustand im Bereich einer der ersten drei lokalen Optima ausgewählt werden, wobei die Optima optional nach einer vorgegebenen Anzahl an Trainingsschritten gezählt sind.

Das Auffinden des (ersten) lokalen Minimums der Lernkurve kann nach Abschluss eines Trainings erfolgen oder auch während dem laufenden Training. Im letzteren Fall kann vorgesehen sein, dass das Training beendet wird, sobald das erste lokale Minimum der geglätteten Lernkurve festgestellt wurde. Als Trainingszustand für das Bildverarbeitungsmodell zum Berechnen stilisierter Kontrastbilder wird nicht der Trainingszustand beim Abbruch des Trainings verwendet (welcher auf das Minimum folgte), sondern ein früherer Trainingszustand im Bereich des Minimums. Wird das Training nach dem ersten lokalen Minimum beendet, stellt das lokale Minimum auch ein globales Minimum dar.

Um bereits während des laufenden Trainings einen für die Stilisierung geeigneten Trainingszustand zu ermitteln, kann auch vorgesehen sein, dass während dem Training eine Lernkurve erfasst wird und das Training beendet wird, sobald über mehrere aufeinanderfolgende Trainingsschritte (bzw. eine vorgegebene Anzahl aufeinanderfolgender Trainingsschritte) in der Lernkurve eine Fehlerreduzierung eintritt, die stärker als ein vorgegebener Schwellwert ist. Ein Trainingszustand beim Beenden des Trainings wird ausgewählt, um aus eingegebenen Mikroskopbildern stilisierte Kontrastbilder zu erzeugen. Ein erstmaliger schneller und starker Abfall in der Lernkurve erfolgt, wenn das Modell lernt, die Lage und durchschnittliche Helligkeit von Objekten vorherzusagen, ohne Strukturdetails der Objekte. Ein Punkt nach diesem Abfall stimmt in etwa mit dem zuvor beschriebenen ersten lokalen Minimum überein. Wird das Training durch das Kriterium eines erstmaligen starken Abfalls der Lernkurve abgebrochen, kann eine unnötig lange Trainingszeit vermieden werden.

In einer ähnlichen Variante kann während dem laufenden Training aus der Lernkurve ermittelt werden, wann es über mehrere Trainingsschritte zu einem Anstieg (also einer schlechteren Vorhersagegenauigkeit) der Lernkurve kommt. Überschreitet dieser Anstieg einen vorgegebenen Schwellwert, kann das Training beendet werden und ein Trainingszustand im Bereich eines Punkts der Lernkurve vor dem Anstieg ausgewählt werden.

An die (geglättete) Lernkurve kann auch eine Funktion angepasst werden, beispielsweise eine Polynomfunktion, aus welcher anschließend z.B. das erste lokale Optimum ermittelt wird. Allgemeiner kann eine Krümmung oder eine Ableitung einer Fitfunktion an die Lernkurve ausgewertet werden, um einen Trainingszustand auszuwählen, einen Bereich potentiell geeigneter Trainingszustände zu ermitteln, oder eine Beendigung eines laufenden Trainings anzuordnen. Die Beendigung kann z.B. vorgesehen sein, wenn die Krümmung oder der Absolutwert einer Steigung einen vorgegebenen Wert unterschreitet. Neben Minima/Maxima können auch Wendestellen identifiziert werden, insbesondere eine Wendestelle zwischen dem ersten lokalen Minimum und einem darauffolgenden Maximum. Die Fitfunktion kann auch eine logarithmische Funktion oder eine Hyperbel sein, die insbesondere proportional zu 1/S sein kann, wobei S die Anzahl an Trainingsschritten angibt. Auf der Hyperbel kann ein Scheitelpunkt identifiziert werden (für die Funktion 1/S ist dies der Punkt mit der Steigung -1) und ein Trainingszustand im Bereich des Scheitelpunkts kann ausgewählt werden.

### Berechnen der Anzahl durchzuführender Trainingsschritte

In weiteren Varianten der Erfindung wird durch einen Algorithmus eine durchzuführende Anzahl an Trainingsschritten festgelegt, bis das Training beendet wird. Die Anzahl ist abhängig von einem Umfang vorhandener Trainingsdaten, wobei der Algorithmus eine umso größere Anzahl durchzuführender Trainingsschritte wählt, je größer der Umfang genutzter Trainingsdaten ist. Alternativ oder zusätzlich wird eine Referenzanzahl an Trainingsschritten vorgegeben, nach welcher eine Konvergenz erwartet wird, und der Algorithmus legt für die Anzahl durchzuführender Trainingsschritte einen Wert fest, der höchstens 25% oder höchstens 15% der Referenzanzahl beträgt. Optional kann auch eine Untergrenze, die beispielsweise zwischen 2% und 5% der Referenzanzahl beträgt, vorgegeben sein. Die vorgegebene Referenzanzahl an Trainingsschritten kann durch einen Nutzer eingebbar sein oder durch den Algorithmus aus Daten über einen oder mehrere frühere Trainingsvorgänge ermittelt werden. Beispielsweise kann aus mindestens einer Lernkurve eines früheren Trainingsvorgangs ermittelt werden, nach wie vielen Trainingsschritten eine Konvergenz, ein Loss unter einem vorgegebenen Schwellwert, oder ein globales Minimum des an Validierungsdaten berechneten Loss erzielt wird. Diese Anzahl an Trainingsschritten kann die Referenzanzahl bilden oder in eine Formel zur Berechnung der Referenzanzahl eingehen. Die Formel kann weitere Variablen berücksichtigen, z.B. den Umfang der verwendeten Trainingsdaten. Dadurch kann eine Referenzanzahl auch dann vom Algorithmus passend festgelegt werden, wenn der Umfang an Trainingsdaten von früheren Trainingsvorgängen abweicht.

Ein Trainingszustand nach der durchzuführenden Anzahl an Trainingsschritten, die vom Algorithmus festgelegt wurde, kann ausgewählt und als Bildverarbeitungsmodell zum Erzeugen stilisierter Kontrastbilder verwendet werden. Alternativ wird nach der durchzuführenden Anzahl an Trainingsschritten in einer der beschriebenen Weisen anhand der Lernkurve oder anhand von Eigenschaften der Ausgabebilder einer der Trainingszustände ausgewählt. In diesen Varianten dient die vom Algorithmus festgelegte Anzahl durchzuführender Trainingsschritte dazu, ein unnötig langes Training zu vermeiden, während die tatsächliche Auswahl eines Trainingszustandes in einer der zuvor beschriebenen Weisen erfolgt.

### Modellauswahl nach vollständigem Training

Die Auswahl eines Trainingszustands kann optional erst nach Abschluss des Trainings erfolgen. Das heißt, zunächst wird das Training des Bildverarbeitungsmodells bis zu einem Stoppkriterium durchgeführt, z.B. bis eine Konvergenz erreicht ist, bis in einer Lernkurve an Validierungsdaten ein Überschreiten eines globalen Optimums festgestellt wird oder eine vorgegebene Anzahl an Trainingsschritten oder Epochen erreicht ist. Während des Trainingsverlaufs werden verschiedene Trainingszustände gespeichert, beispielsweise jeder Trainingszustand, jeweils ein Trainingszustand pro Epoche oder jeweils ein Trainingszustand nach einer vorgegebenen Anzahl an Trainingsschritten.

In manchen Varianten wird zur Auswahl eines der gespeicherten Trainingszustände eine Lernkurve ausgewertet. Beispielsweise wird in der bereits beschriebenen Weise ein erstes lokales Minimum der Lernkurve ermittelt. Derjenige gespeicherte Trainingszustand, welcher in seiner Anzahl an Trainingsschritten dem ermittelten Punkt/Minimum der Lernkurve am nächsten ist, wird ausgewählt.

Alternativ oder zusätzlich wird das Bildverarbeitungsmodell in mehreren der gespeicherten Trainingszuständen verwendet, um jeweils aus Mikroskopbildern von Validierungsdaten Ausgabebilder zu berechnen. Anhand dieser Ausgabebilder kann sodann einer der gespeicherten Trainingszustände ausgewählt werden. Optional werden allein Ausgabebilder, die mit Trainingszuständen eines initialen Trainingsabschnitts berechnet sind, ausgewertet, um einen der Trainingszustände auszuwählen. Dieses Vorgehen nutzt den Umstand, dass ein Erzeugen stilisierter Kontrastbilder nur durch Trainingszustände in einem frühen Abschnitt des Trainingsvorgangs möglich ist. Ein initialer Trainingsabschnitt kann beispielsweise bis zu einer Anzahl an Trainingsschritten laufen, welche in einem Bereich zwischen 5% und 40% einer Gesamtanzahl durchgeführter Trainingsschritte liegt.

Als Auswertung der Ausgabebilder, die mit Trainingszuständen des initialen Trainingsabschnitts berechnet sind, kann ermittelt werden, in welcher Phase im Trainingsverlauf eine stärkste Änderung von Modellvorhersagen (Ausgabebildern) eingetreten ist. Dazu werden Änderungen zwischen Ausgabebildern, die aus demselben Mikroskopbild mit verschiedenen Trainingszuständen berechnet sind, ermittelt. Beispielsweise kann die Änderung einer Spreizung der Helligkeitshistogramme zwischen den Ausgabebildern verschiedener Trainingszustände ermittelt werden. Alternativ kann die Änderung einer Signalstärke von Frequenzen oberhalb eines vorgegebenen Schwellwerts in Fourier-Spektren der Ausgabebilder betrachtet werden. Die stärkste Änderung dieser Eigenschaften im gesamten Trainingsverlauf, oder zumindest nach einer vorgegebenen Anzahl an Trainingsschritten, tritt ein, wenn das Modell lernt, Texturdetails von dargestellten Objekten zu ergänzen. In dieser Phase kommt es zu einer Vergrößerung der Spreizung der Helligkeitshistogramme bzw. zu einer Verstärkung hochfrequenter Signalanteile der Fourier-Spektren. Es kann ein Trainingszustand im Bereich dieser Phase, insbesondere direkt zu Beginn oder direkt vor dieser Phase, ausgewählt werden.

### Modellauswahl mit Nutzerinteraktion

Zum Auswählen des Trainingszustands können auch mehrere Ausgabebilder, die das Bildverarbeitungsmodell in verschiedenen Trainingszuständen berechnet, einem Nutzer angezeigt werden. Die Ausgabebilder können insbesondere aus demselben Mikroskopbild berechnet werden. Es wird eine Auswahlmöglichkeit für den Nutzer bereitgestellt, durch welche der Nutzer einen der verschiedenen Trainingszustände über die zugehörigen Ausgabebilder auswählen kann.

Die Anzeige kann während dem Training erfolgen, so dass das Training abgebrochen wird, wenn der Nutzer die Auswahl getroffen hat. Alternativ kann auch ein Training vollständig bis zu einem Stoppkriterium durchgeführt werden und erst anschließend wählt ein Nutzer über die Ausgabebilder einen Trainingszustand aus. Hierbei kann vorgesehen sein, dass allein Ausgabebilder, die mit Trainingszuständen aus einem initialen Trainingsabschnitt berechnet wurden, dem Nutzer zur Auswahl angezeigt werden.

In einer Kombination mit anderen Erfindungsvarianten werden zumindest einige der Trainingszustände, zu denen dem Nutzer Ausgabebilder angezeigt und die Auswahlmöglichkeit bereitgestellt wird, abhängig davon festgelegt, ob die beschriebenen Stilisierungskriterien erfüllt sind. Beispielsweise können mehrere Trainingszustände, die um eine vorbestimmte Anzahl an Trainingsschritten voneinander beabstandet sind und bis zu einer Anzahl an Trainingsschritten reichen, an welcher die Stilisierungskriterien nicht länger erfüllt sind, dem Nutzer zur Auswahl angeboten werden.

In Abwandlungen beschriebener Ausführungsbeispiele werden einem Nutzer mehrere Ausgabebilder angezeigt, die mit verschiedenen Trainingszuständen berechnet wurden, die im Bereich eines ermittelten Trainingszustands liegen. Als "Bereich" können insbesondere diejenigen Trainingszustände angesehen werden, deren Anzahl an Trainingsschritten um höchstens 10% von der Anzahl an Trainingsschritten des ermittelten Trainingszustands abweicht. Wird beispielsweise ein Trainingszustand als Wendepunkt einer an eine Lernkurve angefitteten Funktion ermittelt, oder als Scheitelpunkt einer an die Lernkurve angepassten Hyperbelfunktion, so liegt der ermittelte Trainingszustand verhältnismäßig sicher nah an einem idealen Trainingszustand, der zur Erzeugung stilisierter Kontrastbilder besonders geeignet ist. Jedoch liegt der ermittelte Trainingszustand möglicherweise um eine kleine Differenz an Trainingsschritten (von z.B. höchstens 10% der bis zum ermittelten Trainingszustand durchgeführten Trainingsschritte) vom idealen Trainingszustand entfernt. Daher kann es vorteilhaft sein, wenn einem Nutzer Ausgabebilder, die vom Bildverarbeitungsmodell in mehreren verschiedenen Trainingszuständen im genannten Bereich berechnet werden, angezeigt werden, so dass der Nutzer anhand der Ausgabebilder einen der vorgeschlagenen Trainingszustände auswählen kann.

### Mikroskopbilder und Kontrastbilder

Unter Mikroskopbildern und aufgenommenen Kontrastbildern werden vorliegend allgemein Bilder verstanden, die von Mikroskopen mit verschiedenen Mikroskopietechniken oder Kontrastverfahren aufgenommen wurden. Die Mikroskopbilder und aufgenommenen Kontrastbilder können von demselben Mikroskop oder verschiedenen Mikroskopen stammen. Unter verschiedenen Mikroskopietechniken oder Kontrastverfahren können z.B. Durchlichtverfahren, Lichtblatt-Mikroskopie, Phasenkontrastverfahren, DIC- (Differential-Interferenzkontrast-)Verfahren, Dunkelfeldaufnahmen, Fluoreszenzverfahren oder Bildaufnahmen nach einer chemischen Einfärbung einer Probe verstanden werden. Während allgemein je nach Probe dasselbe Verfahren entweder zur Aufnahme eines Mikroskopbildes oder eines Kontrastbildes dienen kann, können insbesondere Fluoreszenzverfahren und chemische Färbungen zur Aufnahme eines Kontrastbildes genutzt werden. Alle genannten Bilder können insbesondere Ausschnitte (crops) aus aufgenommenen größeren Bildern sein.

### Allgemeine Eigenschaften

Als ein zusätzliches Kriterium für die Auswahl eines Trainingszustandes kann gefordert werden, dass ein vorgegebenes Mindestgütemaß erreicht ist, beispielsweise ein Loss-Wert unter einer vorgegebenen Obergrenze liegt. Hierdurch kann sichergestellt werden, dass das Modell in diesem Zustand bereits in der Lage ist, das Vorhandensein und die Lage größerer Objekte zuverlässig zu berechnen. Wird das Kriterium eines vorgegebenen Mindestgütemaßes mit der Vorgehensweise, das erste lokale Minimum der Lernkurve zu finden, kombiniert, so wird das erste lokale Minimum als dasjenige lokale Minimum verstanden, bei welchem als erstes das vorgegebene Mindestgütemaß erfüllt ist (während in vorhergehenden lokalen Minima das vorgegebene Mindestgütemaß noch nicht erreicht war). Das vorgegebene Mindestgütemaß bzw. eine vorgegebene Loss-Obergrenze kann durch einen Algorithmus automatisch festgelegt werden. Der Algorithmus berücksichtigt die Anzahl und optional Größe der Bilder der Trainings- bzw. Validierungsdaten. Zudem ist die Loss-Obergrenze abhängig von der Art der Loss-Berechnung, beispielsweise abhängig davon, ob eine Summe oder ein Mittelwert aus pixelweisen Unterschieden zwischen Ausgabebildern und vorgegebenen Kontrastbildern berechnet wird.

Unter einer Epoche eines Trainings wird vorliegend verstanden, dass jedes Eingabebild (Mikroskopbild) der Trainingsdaten einmal oder zumindest einmal dem Bildverarbeitungsmodell eingegeben wurde. Eine Anpassung von Modellparametern des Bildverarbeitungsmodells kann einmal oder auch mehrmals pro Epoche erfolgen. Hierfür können jeweils Gruppen, so genannte Batches oder Minibatches, an Trainingsdaten verwendet werden, aus welchen ein Loss und eine Anpassung der Modellparameter berechnet wird. Als ein Trainingsschritt wird der Vorgang bezeichnet, dass durch (einen Teil der) Trainingsdaten ein Loss und eine Anpassung der Modellparameter berechnet wird. Im nächsten Trainingsschritt wird anhand eines anderen Teils der Trainingsdaten, oder prinzipiell auch anhand desselben Teils der Trainingsdaten, erneut ein Loss und eine Anpassung der Modellparameter berechnet. Eine Epoche kann daher einen oder mehrere Trainingsschritte umfassen. Erfindungsvarianten, die auf Trainingsschritte Bezug nehmen, können auch durch eine Anzahl an Epochen anstelle von Trainingsschritten ausgedrückt werden. Beispielsweise kann eine Epochenanzahl des ersten lokalen Minimums der Lernkurve ermittelt und ein Trainingszustand bei dieser Epochenanzahl ausgewählt werden.

Trainingsdaten umfassen Eingabedaten und zugehörige, vorgegebene Zieldaten. Bei den Eingabedaten handelt es sich um die Mikroskopbilder und bei den Zieldaten um die Kontrastbilder. Im Training berechnet das Bildverarbeitungsmodell mit den aktuellen Modellparameterwerten aus mehreren der Mikroskopbildern jeweils ein Ausgabebild. Diese Ausgabebilder werden mit den zugehörigen Zieldaten, das heißt den zugehörigen Kontrastbildern, in einer Verlustfunktion verrechnet. Hierüber wird eine Anpassung der Modellparameterwerte berechnet, z.B. mittels Backpropagation und Gradientenabstieg. Als Validierungsdaten werden Daten bezeichnet, die den Trainingsdaten entsprechen; beispielsweise können vorhandene Sätze aus Mikroskopbildern und zugehörigen Kontrastbildern zufällig in Trainingsdaten und Validierungsdaten eingeteilt werden. Die Validierungsdaten werden jedoch nicht zum Anpassen der Modellparameterwerte über die Verlustfunktion verwendet. Typischerweise wird während des Lernverlaufs anhand der Validierungsdaten fortlaufend eine Güte der jeweiligen Trainingszustände ermittelt und protokolliert. Im Sinne der vorliegenden Offenbarung können Testdaten als ein Spezialfall von Validierungsdaten angesehen werden, weil auch Testdaten nicht zur Anpassung der Modellparameterwerte verwendet werden. In manchen Fällen wird ein Trainingsende anhand einer Lernkurve der Validierungsdaten ermittelt, wobei die Testdaten anschließend zur Bewertung des Modells herangezogen werden. Vorliegend können prinzipiell auch die Mikroskopbilder und Kontrastbilder der Testdaten zur Auswahl eines Trainingszustandes genutzt werden, so wie bezüglich Validierungsdaten beschrieben.

Ein Mikroskopiesystem bezeichnet eine Vorrichtung, die zumindest eine Recheneinrichtung und ein Mikroskop umfasst. Unter einem Mikroskop kann insbesondere ein Lichtmikroskop, Röntgenmikroskop, Elektronenmikroskop oder Makroskop verstanden werden.

Die Recheneinrichtung kann dezentral gestaltet sein, physisch Teil des Mikroskops sein, oder separat in der Mikroskopumgebung oder an einem vom Mikroskop beliebig entfernten Ort angeordnet sein. Allgemein kann sie durch eine beliebige Kombination aus Elektronik und Software gebildet sein und insbesondere einen Computer, einen Server, ein cloud-basiertes Rechensystem oder einen oder mehrere Mikro- oder Graphikprozessoren umfassen. Die Recheneinrichtung kann auch zur Steuerung der Probenkamera, der Übersichtskamera, der Bildaufnahme, des Probentischs und/oder anderer Mikroskopkomponenten eingerichtet sein. Eine dezentrale Gestaltung der Recheneinrichtung liegt insbesondere vor, wenn das Training des Bildverarbeitungsmodells mit anderer Hardware erfolgt als die Nutzung des Bildverarbeitungsmodells in der Inferenz, nach Abschluss des Trainings.

Die Probe kann beliebig sein und beispielsweise biologische Zellen oder Zellteile, Material- oder Gesteinsproben, Elektronikkomponenten und/oder in einer Flüssigkeit aufgenommene Objekte umfassen.

Das Mikroskop ist für eine Bildaufnahme eingerichtet, insbesondere von Mikroskopbildern und/oder Kontrastbildern. In manchen Fällen ist das Mikroskop allein zur Aufnahme eines Mikroskopbildes, z.B. eines Phasenkontrastbildes, eingerichtet, nicht aber zur Aufnahme eines Kontrastbildes, z.B. eines Fluoreszenzbildes. In diesem Fall kann durch Ausführung des trainierten Bildverarbeitungsmodells mit dem Mikroskop ein stilisiertes Kontrastbild erzeugt werden, ohne dass Mittel zur Aufnahme eines Kontrastbildes vorhanden sein müssen.

Bei einem Mikroskopbild kann es sich um ein prinzipiell beliebiges Rohbild, das von einem Mikroskop aufgenommen wurde, oder um ein verarbeitetes Bild handeln. Das verarbeitete Bild kann aus einem oder mehreren Rohbildern oder bereits vorverarbeiteten Bildern eines Mikroskops stammen. Beispielsweise kann ein Mikroskopbild ein perspektivisch transformiertes Bild sein und/oder mittels Aneinanderfügen mehrerer Rohbilder gebildet werden, wobei die Rohbilder lateral zueinander versetzte Probenbereiche zeigen (image stitching). Zudem kann das Mikroskopbild durch eine Helligkeits-, Kontrast- oder Tonwertanpassung berechnet sein. Das Mikroskopbild kann insbesondere ein Übersichtsbild oder ein Probenbild sein bzw. hieraus abgeleitet sein. Unter einem Übersichtsbild wird ein von einer Übersichtskamera aufgenommenes Bild verstanden, welche zusätzlich zu einer Probenkamera des Mikroskops vorhanden sein kann, mit welcher stärker vergrößerte Bilder (Probenbilder) eines Probenbereichs aufgenommen werden. Die Übersichtskamera kann an einem ortsfesten Geräterahmen, z.B. einem Mikroskopstativ, angebracht sein oder an einer beweglichen Komponente, z.B. einem Probentisch, Fokussiertrieb oder Objektivrevolver. Das Erhalten eines Bildes kann insbesondere das Laden eines vorhandenen Bildes aus einem Speicher oder die Bildaufnahme mit einer Kamera umfassen. Für Kontrastbilder können die obigen Beschreibungen sinngemäß ebenfalls gelten. Eine Stilisierung der stilisierten Kontrastbilder kann im Sinne einer strukturreduzierten Darstellung verstanden werden, in welcher keine Struktur- oder Texturdetails enthalten sind bzw. weniger Struktur- oder Texturdetails als in den Kontrastbildern der Trainingsdaten enthalten sind, in welcher ein Detailgrad gegenüber den Kontrastbildern reduziert ist und/oder in welcher Objektformen gegenüber den Kontrastbildern vereinfacht sind.

Basierend auf einem stilisierten Kontrastbild kann insbesondere eine Probennavigation, eine Bildsegmentierung oder ein Lokalisieren und Zählen von Zellkernen oder anderen Probenstrukturen erfolgen. Hierzu können entsprechende Programme genutzt werden, die insbesondere nicht speziell für stilisierte Kontrastbilder angepasst sind. Es können daher auch herkömmliche Programme hierzu benutzt werden, die beispielsweise einen einfachen Grenzwertvergleich für eine Bildsegmentierung durchführen. In stilisierten Kontrastbildern kann auch ein Verhalten einer Probe in zeitlicher Sequenz bestimmt werden. Beispielsweise können Bewegungen, Trajektorien, Interaktionen oder Stadien von Zellen, beispielsweise Zellteilungen, ausgewertet werden.

Beschreibungen im Singular sollen die Varianten "genau 1" als auch "mindestens ein(e)" abdecken. Die Beschreibung, dass ein Mikroskopbild dem Bildverarbeitungsmodell eingegeben wird, soll beispielsweise die Möglichkeiten umfassen, dass genau ein oder mindestens ein Mikroskopbild eingegeben wird. Eine gemeinsame Eingabe mehrerer Mikroskopbilder kann vorteilhaft sein, z.B. bei Eingabe eines Bildstapels (z-stack) aus mehreren Mikroskopbildern, die zueinander beabstandete Probenschichten zeigen, oder bei Eingabe mehrerer nacheinander aufgenommener Mikroskopbilder, welche denselben Probenbereich zeigen.

Als ein Zielbild kann ein im Training des Bildverarbeitungsmodells verwendetes Bild verstanden werden, an welches eine Ausgabe des Bildverarbeitungsmodells angenähert werden soll. Die Annäherung erfolgt mit Hilfe einer Zielfunktion, insbesondere einer Gewinn- und/oder Verlustfunktion, welche vorgibt, wie Unterschiede zwischen der Ausgabe des Bildverarbeitungsmodells und des Zielbildes bewertet werden. Die Bewertung der Unterschiede kann pixelweise erfolgen oder durch einen Vergleich abstrakterer Bildbeschreibungen, z.B. von Kantenverläufen. Ein Zielbild wird über ein aufgenommenes Kontrastbild gebildet, das heißt, es kann sich bei dem Zielbild gerade um ein aufgenommenes Kontrastbild handeln, oder das Zielbild wird durch Weiterverarbeitung eines aufgenommenen Kontrastbildes erzeugt. Verschiedene Erfindungsvarianten nennen eine Verlustfunktion bzw. eine Minimierung der Verlustfunktion. In weiteren Abwandlungen kann die Verlustfunktion auch durch eine zu maximierende Gewinnfunktion ersetzt werden.

Unter einem Bildverarbeitungsmodell wird ein maschinell gelerntes Modell verstanden, welches zumindest Bilddaten als Eingabedaten erhält und hieraus zumindest ein Ausgabebild berechnet. Gelernte Modelle bezeichnen Modelle, die von einem Lernalgorithmus anhand von Trainingsdaten gelernt wurden. Die Modelle können beispielsweise jeweils ein oder mehrere faltende neuronale Netze (englisch: convolutional neural network, CNN) umfassen, welche als Eingabe mindestens ein Bild erhalten, welches das Mikroskopbild oder hieraus abgeleitete Bilddaten umfasst. Mit Hilfe eines Lernalgorithmus werden Modellparameter des Modells an Hand der Trainingsdaten festgelegt. Hierzu wird eine vorgegebene Zielfunktion optimiert, z.B. eine Verlustfunktion minimiert. Zum Minimieren der Verlustfunktion werden die Modellparameterwerte verändert, was z.B. durch Gradientenabstieg und Backpropagation berechnet werden kann. Im Fall eines CNN können die Modellparameter insbesondere Einträge von Faltungsmatrizen der verschiedenen Schichten des CNN umfassen. Nicht direkt aufeinanderfolgende Schichten können optional durch sogenannte "skip connections" verbunden sein, wodurch die Ausgabe einer Schicht nicht nur an die direkt darauffolgende Schicht, sondern zusätzlich auch an eine andere Schicht weitergegeben wird. Auch ein U-Netz ist möglich, in welchem durch aufeinanderfolgende Schichten in dem Sinne eine U-Form bilden, dass von den Schichten ausgegebene Merkmale (feature maps) in ihrer Zeilen- und Spaltenanzahl zunächst immer kleiner und in ihrer Tiefe immer größer werden, und anschließend in ihrer Zeilen- und Spaltenanzahl wieder größer und in ihrer Tiefe kleiner werden. Auch eine Gestaltung als cGAN (conditional generative adversarial networks; konditionelles generatives gegnerisches Netzwerk) ist möglich. Hierbei ist ein adversielles Loss bzw. ein Diskriminator ergänzt, welcher schätzt, ob es sich bei einem eingegebenen Bildpaar um ein Mikroskopbild und ein Kontrastbild oder um ein Mikroskopbild und ein vom Modell berechnetes Ausgabebild handelt. Durch die Optimierung der Verlustfunktion zum Erzeugen des Ausgabebildes sollen sowohl Unterschiede zwischen Ausgabebild und vorgegebenem Kontrastbild minimiert werden als auch der Diskriminator getäuscht werden. Andere Modellarchitekturen eines tiefen neuronalen Netzes (englisch: deep neural network) sind ebenfalls möglich.

Eingabedaten in das Bildverarbeitungsmodell können außer mindestens einem Mikroskopbild auch weitere Daten umfassen, insbesondere Kontextinformationen zu dem mindestens einen Mikroskopbild, z.B. Informationen über eine Aufnahmeart des Mikroskopbildes, einen hierbei verwendeten Mikroskop-Parameter oder eine Probenart, z.B. welche Zelllinien dargestellt sind. Die Kontextinformationen werden im Training miteingegeben. In der Inferenz können Kontextinformationen optional eingegeben werden.

Beschriebene Vorgänge erfindungsgemäßer Verfahren sollen nicht als abschließend verstanden werden. Es können an prinzipiell jeder Stelle weitere Zwischenschritte ergänzt werden. Insbesondere können zunächst mehrere Trainingszustände des Bildverarbeitungsmodells gemäß den beschriebenen Ausführungen ausgewählt werden und anschließend wird ein Mittelwert der zugehörigen Trainingsschrittzahlen gebildet, um einen Trainingszustand final auszuwählen. Alternativ können auch Mittelwerte von Modellparameterwerten des Bildverarbeitungsmodells in verschiedenen ausgewählten Trainingszuständen genutzt werden.

Zudem ist eine sogenannte Mean Teacher Mittelung möglich. Hierbei werden im Training mindestens zwei gleichartigen Modellen die gleichen Trainingsdaten (die gleichen Minibatch-Daten), die aber in unterschiedlicher Weise geringfügig manipuliert wurden, eingegeben. Die unterschiedliche Manipulation kann beispielsweise eine Daten-Augmentierung oder ein zugefügtes Rauschen an den Bildern der Trainingsdaten betreffen. Zur verwendeten Verlustfunktion wird ein Konsistenzmaß (consistency loss) ergänzt, welches Unterschiede zwischen den Ausgaben beider Modelle bestraft. Parameterwerte des ersten Modells werden wie üblich angepasst, z.B. durch ein Gradientenabstiegsverfahren und Backpropagation anhand der Verlustfunktion, während Parameterwerte des zweiten Modells durch einen gleitenden Mittelwert aus den aktuellen und früheren Parameterwerten des ersten Modells gebildet werden.

Die als zusätzliche Vorrichtungsmerkmale beschriebenen Eigenschaften der Erfindung ergeben bei bestimmungsgemäßer Verwendung auch Varianten des erfindungsgemäßen Verfahrens. In umgekehrter Weise kann ein Mikroskopiesystem auch zum Ausführen der beschriebenen Verfahrensvarianten eingerichtet sein. Insbesondere kann die Recheneinrichtung dazu eingerichtet sein, die beschriebenen Verfahrensvarianten durchzuführen. Zudem kann die Recheneinrichtung das beschriebene Computerprogramm umfassen. Weitere Varianten ergeben sich daraus, wenn allein die zum Training gehörenden Verfahrensschritte ausgeführt werden.

### KURZBESCHREIBUNG DER FIGUREN

Weitere Wirkungen und Merkmale der Erfindung werden nachstehend mit Bezug auf die beigefügten schematischen Figuren beschrieben:
- FIG. 1: ist eine schematische Darstellung eines Verfahrens zum Erzeugen virtuell eingefärbter Bilder nach dem Stand der Technik;
- FIG. 2: zeigt schematisch ein Ausführungsbeispiel eines Mikroskopiesystems der Erfindung;
- FIG. 3: zeigt schematisch ein Mikroskopbild und ein Kontrastbild als Teil der Trainingsdaten;
- FIG. 4: zeigt schematisch einen Trainingsvorgang von Erfindungsvarianten, um ein Bildverarbeitungsmodell zum Erzeugen stilisierter Kontrastbilder zu bilden;
- FIG. 5: zeigt schematisch eine Lernkurve eines Trainingsvorgangs;
- FIG.6: zeigt Ausgabebilder, die während eines Trainingsvorgangs aus demselben Mikroskopbild berechnet werden;
- FIG. 7: zeigt Helligkeitshistogramme von zwei Ausgabebildern;
- FIG. 8: zeigt Fourier-Spektren von zwei Ausgabebildern;
- FIG. 9: zeigt ein Flussdiagramm eines Ausführungsbeispiels eines erfindungsgemäßen Verfahrens;
- FIG. 10: zeigt ein Flussdiagramm eines weiteren Ausführungsbeispiels eines erfindungsgemäßen Verfahrens;
- FIG. 11: zeigt eine Lernkurve und eine zugehörige gemittelte Lernkurve eines Trainingsvorgangs;
- FIG. 12: zeigt schematisch einen Trainingsvorgang gemäß Ausführungsbeispielen des Verfahrens der Erfindung; und
- FIG. 13: zeigt schematisch die Verwendung eines Bildverarbeitungsmodells im ausgewählten Trainingszustand, um in der Inferenz ein stilisiertes Kontrastbild zu berechnen.

### DETAILLIERTE BESCHREIBUNG VON AUSFÜHRUNGSBEISPIELEN

Verschiedene Ausführungsbeispiele werden nachstehend mit Bezug auf die Figuren beschrieben. Gleiche und gleich wirkende Bestandteile sind in der Regel mit denselben Bezugszeichen gekennzeichnet.

### FIG. 2

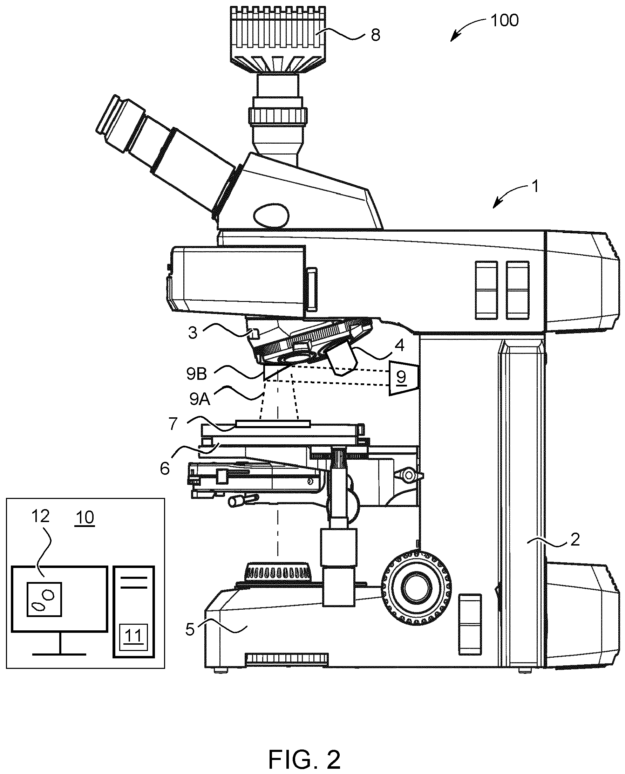

FIG. 2 zeigt ein Ausführungsbeispiel eines erfindungsgemäßen Mikroskopiesystems 100. Dieses umfasst eine Recheneinrichtung 10 und ein Mikroskop 1, welches im dargestellten Beispiel ein Lichtmikroskop ist, prinzipiell aber auch eine andere Art von Mikroskop sein kann. Das Mikroskop 1 umfasst ein Stativ 2, über welches weitere Mikroskopkomponenten gehalten sind. Hierunter können insbesondere fallen: eine Beleuchtungseinrichtung 5; ein Objektivwechsler oder -revolver 3, an dem im dargestellten Beispiel ein Objektiv 4 montiert ist; ein Probentisch 6 mit einem Halterahmen zum Halten eines Probenträgers 7 und eine Mikroskopkamera 8. Ist das Objektiv 4 in den Mikroskopstrahlengang eingeschwenkt, empfängt die Mikroskopkamera 8 Detektionslicht aus einem Probenbereich, in welchem sich eine Probe befinden kann, um ein Probenbild aufzunehmen. Proben können beliebige Objekte, Fluide oder Strukturen sein. Das Mikroskop 1 umfasst optional eine zusätzliche Übersichtskamera 9 zum Aufnehmen eines Übersichtsbildes einer Probenumgebung. Das Übersichtsbild kann dadurch insbesondere den Probenträger 7 oder einen Teil hiervon zeigen. Ein Sichtfeld 9A der Übersichtskamera 9 ist größer als ein Sichtfeld bei einer Aufnahme eines Probenbildes. Im dargestellten Beispiel blickt die Übersichtskamera 9 über einen Spiegel 9B auf den Probenträger 7. Der Spiegel 9B ist am Objektivrevolver 3 angeordnet und kann anstelle des Objektivs 4 ausgewählt werden. Abwandlungen dieser Ausführung verzichten auf den Spiegel oder sehen eine andere Anordnung des Spiegels oder eines anderen Umlenkelements vor. Die Recheneinrichtung 10 umfasst einen optionalen berührungsempfindlichen Bildschirm (Touchscreen) 12 und ein Computerprogramm 11 mit einem Bildverarbeitungsmodell zum Verarbeiten von mindestens einem Mikroskopbild, d.h. einem Proben- oder Übersichtsbild. Hierauf wird nachfolgend mit Bezug auf die folgenden Figuren näher eingegangen.

### FIG. 3

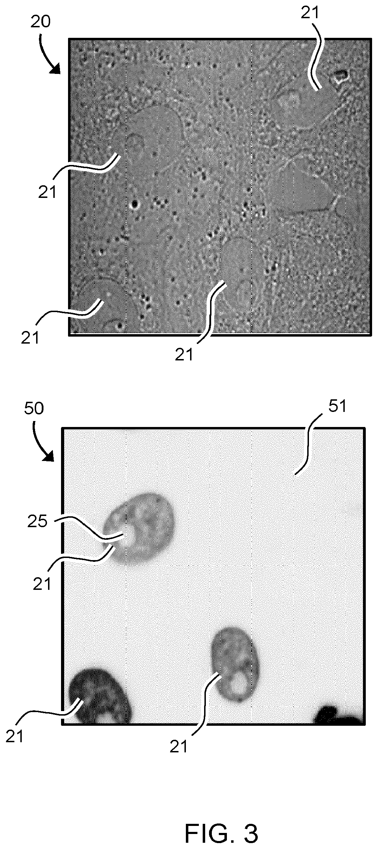

FIG. 3 zeigt schematisch ein Mikroskopbild 20, bei dem es sich in diesem Beispiel um ein Phasenkontrastbild handelt, welches als Probenstrukturen 21 mehrere biologische Zellen zeigt. Die Probenstrukturen 21 sind in dem Phasenkontrastbild nur schwach erkennbar.

FIG. 3 zeigt außerdem ein Kontrastbild 50, bei dem es sich hier um ein Fluoreszenzbild handelt. Eine Einfärbung der Probenstrukturen (Zellen) 21 wurde hier durch Transfektionsfärbung erreicht, so dass die Zellen 21 zur Fluoreszenz anregbar sind und mit wesentlich besserem Kontrast erkennbar sind als im Phasenkontrastbild / Mikroskopbild 20. Im Kontrastbild 50 sind innerhalb der Zellen 21 auch Zellkerne 25 deutlich erkennbar, welche im Phasenkontrastbild 20 nur schwach erkennbar sind.

Bei der Transfektionsfärbung wird in eine Zelle DNA oder RNA eingebracht, durch deren Expression Fluorophore gebildet werden. In der Praxis gelingt die Transfektion jedoch nicht bei allen Zellen. Als Folge exprimieren einige Zellen keine Fluorophore und sind fehlerhafterweise in Fluoreszenzbildern nicht sichtbar. Dadurch ist im Bildbereich 51 des Kontrastbildes 50 unerwünschterweise keine Zelle 21 sichtbar.

Für verschiedene Aufgaben und Auswertungen sind Kontrastbilder 50 gegenüber Mikroskopbildern 20 aufgrund der besseren Sichtbarkeit der Zellen 21 vorteilhaft. Um den apparativen Anforderungen zur Aufnahme eines Kontrastbildes 50, die nötige Probenpräparation und/oder die mit einer Fluoreszenzanregung verbundene Photoschädigung zu vermeiden, soll aus einem Mikroskopbild 20 allein rechnerisch ein Kontrastbild erzeugt werden. Hierzu sind virtuell einfärbende Modelle (virtual staining models) bekannt, wie eingangs zur FIG. 1 erläutert. Zwar können herkömmliche virtuell einfärbende Modell prinzipiell realistisch aussehende Kontrastbilder berechnen, als ein Nachteil kommt es dabei jedoch teilweise zu einem Hinzuerfinden von Probendetails, die nicht mit der Realität übereinstimmen und von einem Nutzer oder einer nachfolgenden Analysesoftware fälschlicherweise als wahr angesehen werden. Teilweise ist auch der Trainingsaufwand für ein gelerntes Modell zum virtuellen Einfärben sehr hoch.

Einige oder alle dieser Nachteile werden durch Erfindungsvarianten überwunden, die im Folgenden näher beschrieben werden. Die Erfindungsvarianten stellen ein Bildverarbeitungsmodell bereit, welches aus einem Mikroskopbild ein stilisiertes Kontrastbild berechnen kann. Das Modell kann eine Lage und grobe Form von Probenstrukturen wie z.B. Zellen zuverlässig voraussagen. Ein Hinzuerfinden von Probendetails wird aufgrund einer als Stilisierung bezeichneten, weitgehend texturfreien Berechnung der Probenstrukturen im erzeugten Bild vermieden. Je nach Ausführungsvariante kann ein Training wesentlich schneller und mit geringeren Ressourcen erfolgen als bei herkömmlichen virtuell einfärbenden Modellen, wie nachfolgend detaillierter beschrieben.

### FIG. 4

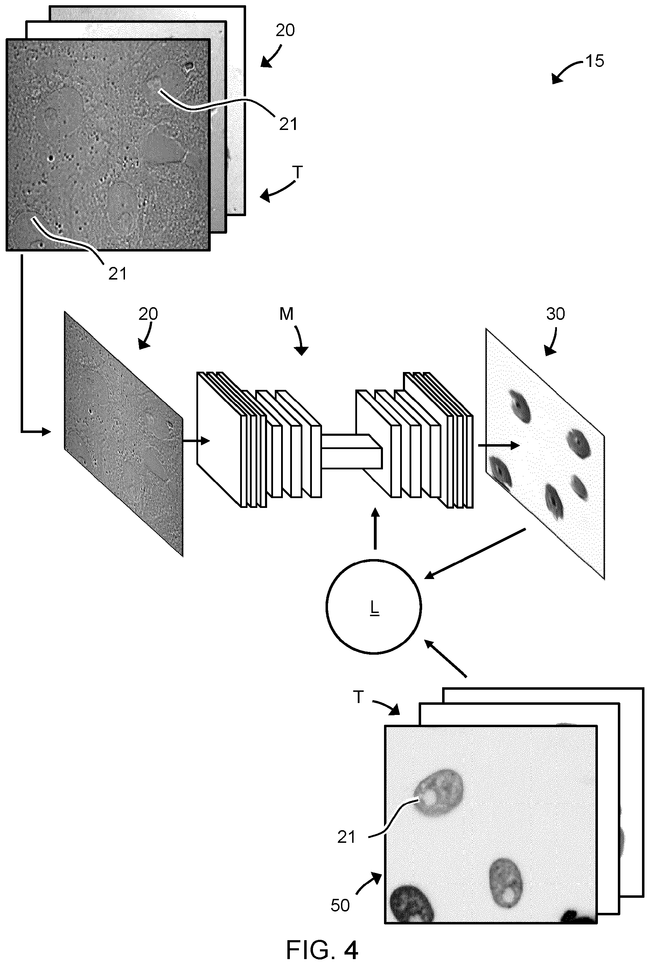

FIG. 4 zeigt schematisch ein Training 15 eines Bildverarbeitungsmodells M gemäß Ausführungsbeispielen der Erfindung. Im Training 15 verwendete Trainingsdaten T umfassen mehrere Mikroskopbilder 20, welche als Eingabedaten dem Bildverarbeitungsmodell M eingegeben werden. Die Trainingsdaten T umfassen zudem Kontrastbilder 50, welche als Zieldaten verwendet werden. Die Kontrastbilder 50 sind zu den Mikroskopbildern 20 registriert, das heißt ein Probenpunkt ist in einem Mikroskopbild 20 und dem zugehörigen Kontrastbild 50 an denselben Bildkoordinaten dargestellt.

Das Bildverarbeitungsmodell M ist oder umfasst mindestens ein faltendes neuronales Netz (CNN, convolutional neural network), welches eine U-Net Architektur haben kann. Modellparameter sind hierbei insbesondere durch Einträge von Faltungsmatrizen des CNN gegeben. Durch das Training 15 werden Modellparameterwerte iterativ angepasst. Basierend auf aktuellen Modellparameterwerten berechnet das Bildverarbeitungsmodell M aus einem eingegebenen Mikroskopbild 20 ein Ausgabebild 30. Durch eine Verlustfunktion L wird ein Unterschied zwischen dem Ausgabebild 30 und dem zugehörigen Kontrastbild 50 erfasst. Beispielsweise kann in der Verlustfunktion pixelweise ein Unterschied zwischen dem Ausgabebild 30 und dem Kontrastbild 50 erfasst werden und die Unterschiede oder ihre Quadrate werden summiert oder gemittelt. Durch einen Lernalgorithmus erfolgt eine Minimierung der Verlustfunktion L. Dazu werden die aktuellen Modellparameterwerte in prinzipiell bekannter Weise angepasst, beispielsweise über ein Gradientenabstiegsverfahren mit Backpropagation. Anschließend werden erneut ein oder mehrere der Mikroskopbilder 20 eingegeben und es erfolgt eine erneute Anpassung der Modellparameterwerte. Jeder Durchgang, in dem ein oder mehrere Mikroskopbilder 20 eingegeben werden und eine Anpassung der Modellparameterwerte erfolgt, wird als ein Trainingsschritt bezeichnet. In verschiedenen Trainingsschritten können unterschiedliche Mikroskopbilder 20 oder auch (teilweise) dieselben Mikroskopbilder verwendet werden.

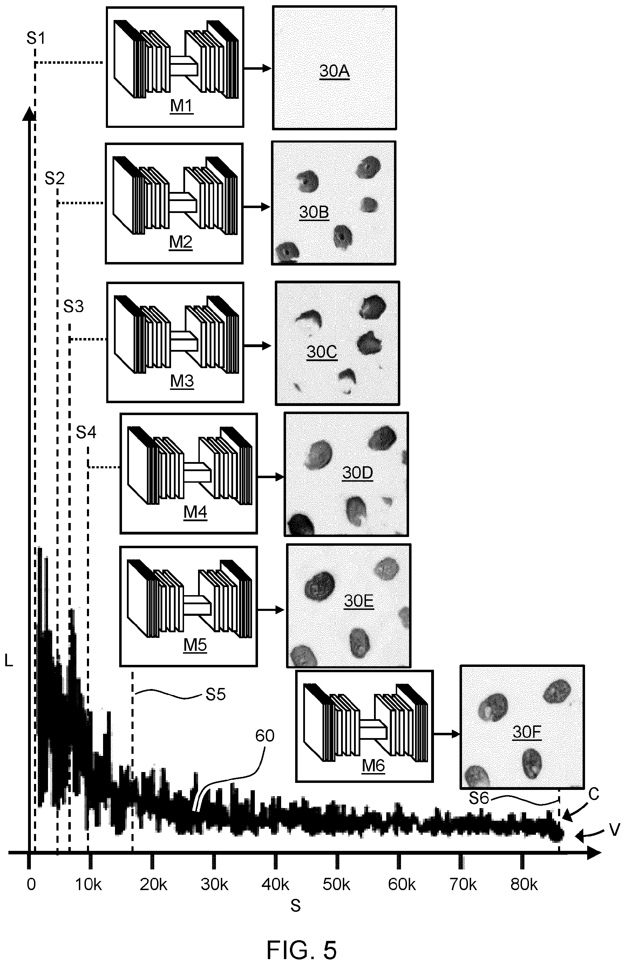

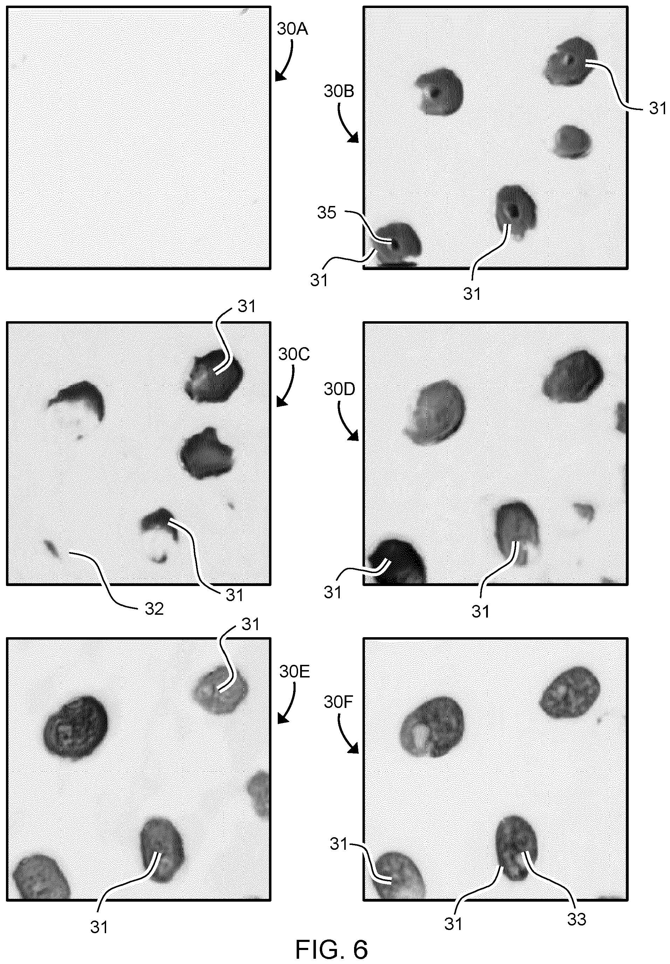

Wird das Training 15 über viele Trainingsschritte durchgeführt, werden die jeweils berechneten Ausgabebilder 30 den Kontrastbildern 50 immer ähnlicher, wie weiter mit Bezug auf die Figuren 5 und 6 beschrieben wird.

### FIG. 5

FIG. 5 zeigt schematisch eine Lernkurve 60 zum Training des Bildverarbeitungsmodells aus der vorhergehenden Figur. Die Lernkurve 60 gibt einen jeweiligen Wert der Verlustfunktion L über einen Trainingsverlauf V hinweg an. Auf der horizontalen Achse ist der Trainingsverlauf V durch die Anzahl durchgeführter Trainingsschritte S angegeben. Die Anzahl durchgeführter Trainingsschritte S kann auch als Erfahrung oder Anzahl an Iterationen bezeichnet werden. Allgemeiner kann die Lernkurve 60 anstelle eines jeweils aktuellen Werts der Verlustfunktion (Verlustwert) auch durch ein anderes Gütemaß ausgedrückt werden. Das Gütemaß erfasst Unterschiede zwischen berechneten Ausgabebildern des Bildverarbeitungsmodells zu vorgegebenen Kontrastbildern. Über den Trainingsverlauf V wird die Verlustfunktion L minimiert, womit die Ausgabebilder den Kontrastbildern ähnlicher werden. Eine Konvergenz C ist in diesem Beispiel nach etwa 70.000 bis 85.000 Trainingsschritten erreicht. Die Konvergenz C kann darüber definiert sein, dass über eine bestimmte Anzahl an Trainingsschritten (beispielsweise 100 oder 1000 Trainingsschritte) keine Reduzierung bzw. Änderung des Verlustwertes erreicht wird, oder eine Reduzierung, die unterhalb eines vorgegebenen Schwellwerts liegt (beispielsweise kleiner als 1% des aktuellen Verlustwerts).

Unter einem Trainingszustand des Bildverarbeitungsmodells kann das Bildverarbeitungsmodell mit den Modellparameterwerten nach einer bestimmten Anzahl an Trainingsschritten verstanden werden. Mit jedem Trainingsschritt ändert sich somit der Trainingszustand. Je nach Trainingszustand werden daher aus demselben eingegebenen Mikroskopbild verschiedene Ausgabebilder berechnet. In FIG. 5 ist das Bildverarbeitungsmodell in einem Trainingszustand M1 nach einer Anzahl von S1 Trainingsschritten eingezeichnet, zusammen mit einem Ausgabebild 30A, das in diesem Trainingszustand M1 berechnet wird. In analoger Weise sind weitere Anzahlen S2-S6 an Trainingsschritten eingetragen, zusammen mit dem entsprechenden Trainingszustand M2-M6 und einem jeweils berechneten Ausgabebild 30B-30F. Die Ausgabebilder 30A-30F sind vergrößert in FIG. 6 dargestellt, worauf im Folgenden eingegangen wird.

### FIG. 6

FIG. 6 zeigt mehrere Ausgabebilder 30A-30F, welche jeweils aus dem Mikroskopbild 20 der FIG. 3 berechnet sind. Bei den Ausgabebildern 30A-30F handelt es sich um experimentell tatsächlich mit dem Bildverarbeitungsmodell berechnete Bilder, wobei zur besseren Darstellbarkeit lediglich eine Inversion (Umkehr von hell und dunkel) und eine Kontrasterhöhung (Tonwertspreizung) ergänzt sind. Das Phasenkontrastbild 20 und das Kontrastbild 50 aus FIG. 3 entsprechen ebenfalls bis auf Helligkeits- und Kontrastanpassungen den tatsächlich im Training verwendeten Bildern.

Das Ausgabebild 30A wurde zu Beginn des Trainings des Bildverarbeitungsmodells berechnet; in diesem frühen Trainingszustand können noch keine Probenstrukturen nachgebildet werden.

Das Ausgabebild 30B ist im Trainingszustand M2 nach etwa 4.500 Trainingsschritten berechnet. Es sind Probenstrukturen 31 erkennbar, welche in ihrer Position und Größe verhältnismäßig präzise mit den Probenstrukturen 21 im Mikroskopbild 20 bzw. Kontrastbild 50 übereinstimmen. Die im Kontrastbild 50 fehlende Transfektion im Bildbereich 51 hat hier nicht zu einem Fehler im Ausgabebild 30B geführt (im Ausgabebild 30B ist oben rechts eine Zelle 31 dargestellt), da das Bildverarbeitungsmodell M an hinreichend vielen Paaren aus Mikroskopbild 20 und Kontrastbild 50 mit korrekter Darstellung von Zellen trainiert wurde. Die Probenstrukturen 31 zeigen eine Zelle in weitgehend einheitlicher Helligkeit, wobei ein Zellkern 35 in anderer Helligkeit als ein übriger Zellbereich dargestellt wird.

Das Ausgabebild 30C ist im Trainingszustand M3 nach etwa 5.500 Trainingsschritten berechnet. In diesem Trainingsabschnitt versucht das Modell, fehlende Details über einen größeren Bereich an Helligkeitswerten nachzubilden. Hierbei wird ein Verlustwert größer und das Vorhandensein bzw. eine Lage von Zellen 21 kann weniger zuverlässig vorausgesagt werden, wie im Bildbereich 32 des Ausgabebildes 30C der Fall, wo keine Zelle oder keine als Zelle erkennbare Struktur erzeugt wird.

Im Ausgabebild 30D, welches nach etwa 9.000 Trainingsschritten berechnet ist, und dem Ausgabebild 30E, das nach ca. 17.000 Schritten berechnet ist, werden die Lage und Größe von Zellen wieder besser nachgebildet und es werden ansatzweise Strukturen innerhalb der Zellen 31 erzeugt.

Das Ausgabebild 30F, welches im Trainingszustand M6 nach ca. 85.000 Schritten berechnet ist, zeigt virtuell eingefärbte Zellen 31 in präziser Darstellung. Dabei sind auch Strukturdetails 33 innerhalb der Zellen 31 nachgebildet, welche jedoch nicht identisch mit tatsächlich vorhandenen Strukturdetails übereinstimmen.

Das Bildverarbeitungsmodell im Trainingszustand M6 erzeugt echt aussehende virtuell eingefärbte Bilder. Als Bildverarbeitungsmodell zum Berechnen stilisierter Kontrastbilder ist hingegeben der Trainingszustand M2 geeignet.

Es wurde in Vorarbeiten der Erfindung beobachtet, dass ein Fehler in den Trainingsdaten, z.B. der Bildbereich 51 einer fehlenden Transfektion im Kontrastbild 50 aus FIG. 3, im frühen Trainingsverlauf keine starke Auswirkung auf Ausgabebilder hat, während im späteren Trainingsverlauf das Modell versucht, fehlerhafte Bildbereiche 51 nachzubilden. Daher eignet sich der sehr früh erreichte Trainingszustand M2 zur Erzeugung stilisierter Kontrastbilder auch gerade bei Trainingsdaten, die fehlerhafte Transfektionen oder andere Fehlstellen umfassen. Ein Grund hierfür ist, dass fehlerhafte Transfektionen zu Beginn des Trainings einen kleineren Prozentanteil des Loss zwischen Ausgabebild und vorgegebenem Zielbild beitragen, als im späteren Trainingsverlauf.

Nachstehend wird auf Möglichkeiten eingegangen, um einen Trainingszustand wie den Trainingszustand M2 zu ermitteln.

### FIG. 7

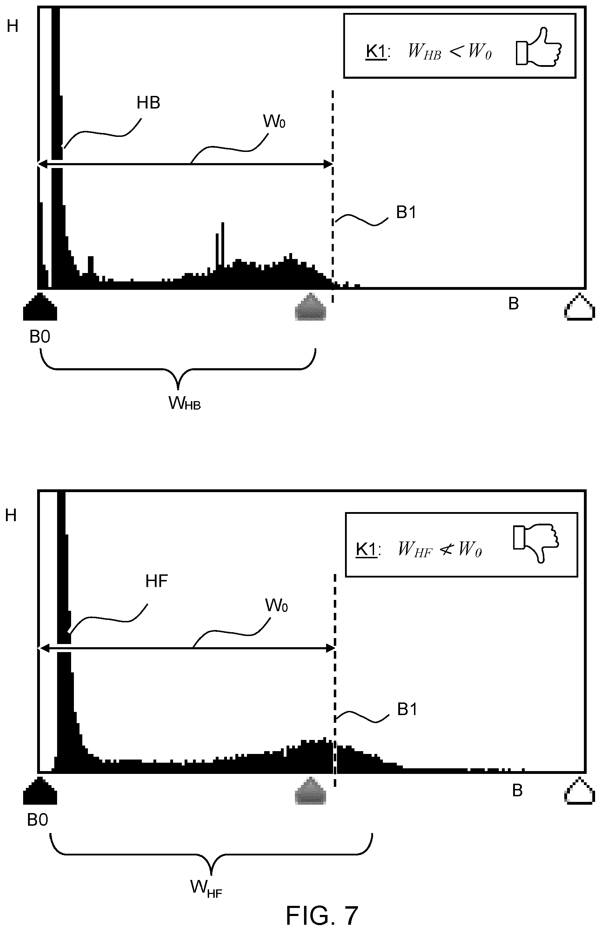

Um einen geeigneten Trainingszustands zum Berechnen stilisierter Kontrastbilder zu identifizieren, kann ein Stilisierungskriterium betrachtet werden. Im Beispiel von FIG. 7 wird ein Stilisierungskriterium K1 verwendet, welches eine Aufspreizung von Helligkeitswerten in berechneten Ausgabebildern betrifft. Eine Aufspreizung von Helligkeitswerten ist ein geeignetes Kriterium, weil im frühen Trainingsverlauf das Bildverarbeitungsmodell zunächst lernt, mit wenigen verschiedenen Helligkeitswerten die Lage von Probenstrukturen 21 nachzubilden; erst danach wird über eine größere Anzahl verschiedener Helligkeitswerte versucht, Details der Probenstrukturen darzustellen.

Beispielhaft zeigt FIG. 7 in der oberen Hälfte ein Histogramm bzw. eine Helligkeitsverteilung HB zum Ausgabebild 30B und in der unteren Hälfte eine Helligkeitsverteilung HF zum Ausgabebild 30F. Eine Helligkeitsverteilung gibt eine Häufigkeit H an Pixeln einer bestimmten Helligkeit B eines Ausgabebildes an.

Die Helligkeitsverteilungen HB und HF sind aus tatsächlichen Ausgabebildern berechnet, wobei jedoch im Unterschied zu FIG. 6 keine Helligkeitsinversion durchgeführt wurde, das heißt Zellen erscheinen hell vor einem dunklen Hintergrund, und nicht wie in FIG. 6 dunkel vor einem hellen Hintergrund.

Als Stilisierungskriterium K1 wird ermittelt, ob die Helligkeitsverteilung HB bzw. HF innerhalb einer vorgegebenen Aufspreizung W₀ liegt. Die Aufspreizung W₀ kann als Bereich von einem Pixelwert / einer Pixelhelligkeit B0 bis zu einer Pixelhelligkeit B1 definiert sein. Für die Helligkeitsverteilung HB kann eine Breite W_{HB} dadurch definiert werden, dass ein bestimmter Prozentanteil aller Pixel, beispielsweise 95%, innerhalb dieser Breite liegt. Für die Helligkeitsverteilung HB ist das Stilisierungskriterium K1, das heißt W_{HB} < W₀ erfüllt. Das entsprechende Ausgabebild 30B wird demnach als stilisiert eingestuft.

Die Helligkeitsverteilung HF hat eine größere Breite W_{HF} und infolgedessen wird das Stilisierungskriterium K1, das heißt W_{HF}<W₀, nicht erfüllt. Das entsprechende Ausgabebild 30F wird demnach nicht als stilisiert eingestuft.

Im Verlauf eines Trainings kann aus berechneten Ausgabebildern jeweils ermittelt werden, ob das Stilisierungskriterium K1 noch erfüllt ist. Über den Trainingsverlauf nimmt die Breite der Helligkeitsverteilung der berechneten Ausgabebilder zu. Ein letzter Trainingszustand, zu dem das Stilisierungskriterium K1 noch erfüllt ist, kann nun ausgewählt und als Bildverarbeitungsmodell zum Berechnen stilisierter Kontrastbilder benutzt werden.

Werden Bilder mit mehreren Farbkanälen anstelle eines einzigen Graukanals genutzt, so kann pro Farbkanal eine jeweilige Helligkeitsverteilung mit zugehörigem Stilisierungskriterium ausgewertet werden; alternativ kann das Farbbild in ein Graubild umgewandelt werden.

Ein weiteres Stilisierungskriterium wird mit Bezug auf die folgende Figur beschrieben.

### FIG. 8

Anstelle oder zusätzlich zu dem Stilisierungskriterium betreffend eine Aufspreizung von Helligkeitswerten können auch Fourier-Spektren ausgewertet werden.

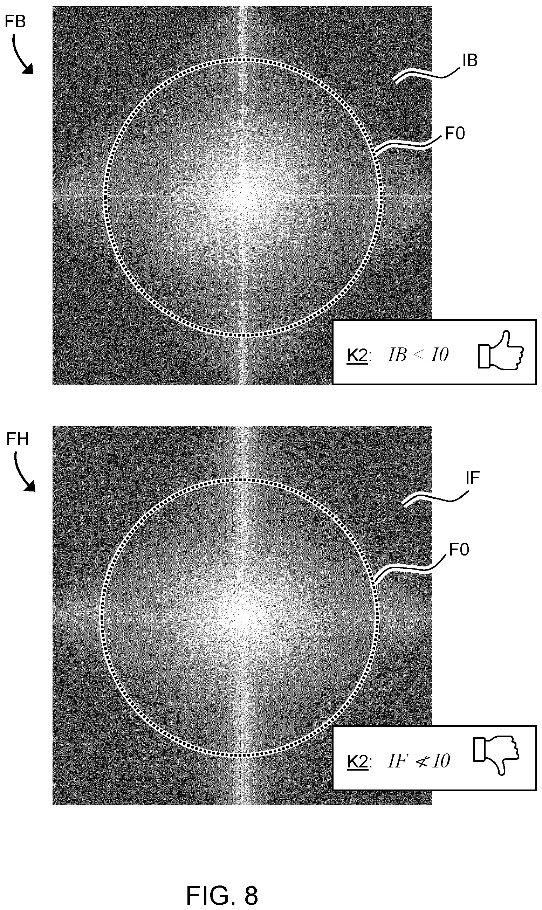

FIG. 8 zeigt beispielhaft ein Fourier-Spektrum FB zum Ausgabebild 30B und ein Fourier-Spektrum FF zum Ausgabebild 30F. Durch eine zwei-dimensionale FourierTransformation eines Ausgabebildes können ein Fourier-Spektrum (Amplitudenspektrum) sowie ein zugehöriges Phasenspektrum erhalten werden. Ein Mittelpunkt des Fourier-Spektrums in der dargestellten Weise entspricht einer räumlichen Frequenz von null. Je weiter ein Punkt in horizontaler Richtung vom Mittelpunkt entfernt ist, desto größer ist der Betrag der räumlichen Frequenz in horizontaler Richtung. Ein Abstand eines Pixels in vertikaler Richtung zum Mittelpunkt kennzeichnet einen Betrag der räumlichen Frequenz in vertikaler Richtung. Die Lage eines Pixels im Fourier-Spektrum gibt demnach eine räumliche Frequenz an. Ein Helligkeitswert eines Pixels im Fourier-Spektrum gibt die zugehörige Amplitude an. In der Darstellung von FIG. 8 ist die Amplitude umso größer, je heller der entsprechende Pixel ist.

Zu Beginn eines Trainings lernt das Bildverarbeitungsmodell, eine Lage größerer Objekte, wie die Lage der Zellen 21, zu reproduzieren, wofür hohe Frequenzen nicht stark genutzt werden. Sobald eine Phase im Training beginnt, in welcher die Nachbildung von Strukturdetails gelernt wird, werden verstärkt höherfrequente Bildanteile hinzugefügt. Ein stilisiertes Kontrastbild unterscheidet sich daher von realistisch erscheinenden Kontrastbildern in der Stärke höherfrequenter Anteile.

Für ein Stilisierungskriterium K2 werden daher diejenigen Signalstärken IB des Fourier-Spektrums FB betrachtet, welche oberhalb eines vorgegebenen Frequenzbereichs F0 liegen. Im dargestellten Beispiel sind dies die Pixelwerte der Pixel außerhalb des durch die gepunktete Kreislinie begrenzten Frequenzbereichs F0. Liegen die Signalstärken IB unter einer vorgegebenen Grenze (Signalstärkenobergrenze) I0, so wird das entsprechende Ausgabebild als stilisiert eingestuft. Die Signalstärke IB kann beispielsweise die Summe der zugehörigen Pixelwerte sein, optional gewichtet mit dem zu jedem Pixel gehörenden Frequenzwert. Im Fall des Fourier-Spektrums FB wird das Stilisierungskriterium K2 erfüllt und das zugehörige Ausgabebild 30B als stilisiert eingestuft. Hingegen erfüllt das Fourier-Spektrum FF das Stilisierungskriterium K2 nicht und das zugehörige Ausgabebild 30F wird dementsprechend nicht als stilisiert eingestuft. Die Unterschiede zwischen den Fourier-Spektren FB und FF sind mit bloßem Auge in FIG. 8 schwer erkenntlich, mathematisch jedoch in der beschriebenen Weise klar erfassbar.

In FIG. 8 ist der gepunktet dargestellte Verlauf des Frequenzbereichs F0 lediglich schematisch zu verstehen. Andere Grenzverläufe sind möglich. Zudem genügt es, auch nur eine Hälfte eines Fourier-Spektrums auszuwerten, z.B. die rechte Hälfte. Durch eine optionale Vorverarbeitung der Fourier-Spektren kann beispielsweise das durch den Bildmittelpunkt verlaufende Kreuz ausgeblendet werden.

Als Trainingszustand für ein Modell zum Berechnen stilisierter Kontrastbilder kann beispielhaft der letzte Trainingszustand (also der Trainingszustand mit der höchsten Anzahl an Trainingsschritten) ausgewählt werden, mit welchem Ausgabebilder berechnet werden, welche das Stilisierungskriterium K2 noch erfüllen.

Zum leichteren Verständnis wurden die Stilisierungskriterien mit Bezug auf ein einziges Ausgabebild zu einem Trainingszustand beschrieben, wobei aber auch mehrere Ausgabebilder zu demselben Trainingszustand berücksichtigt werden können. Zudem können entweder ganze Bilder oder jeweils mehrere Ausschnitte von Bildern in der beschriebenen Weise ausgewertet werden.

### FIG. 9

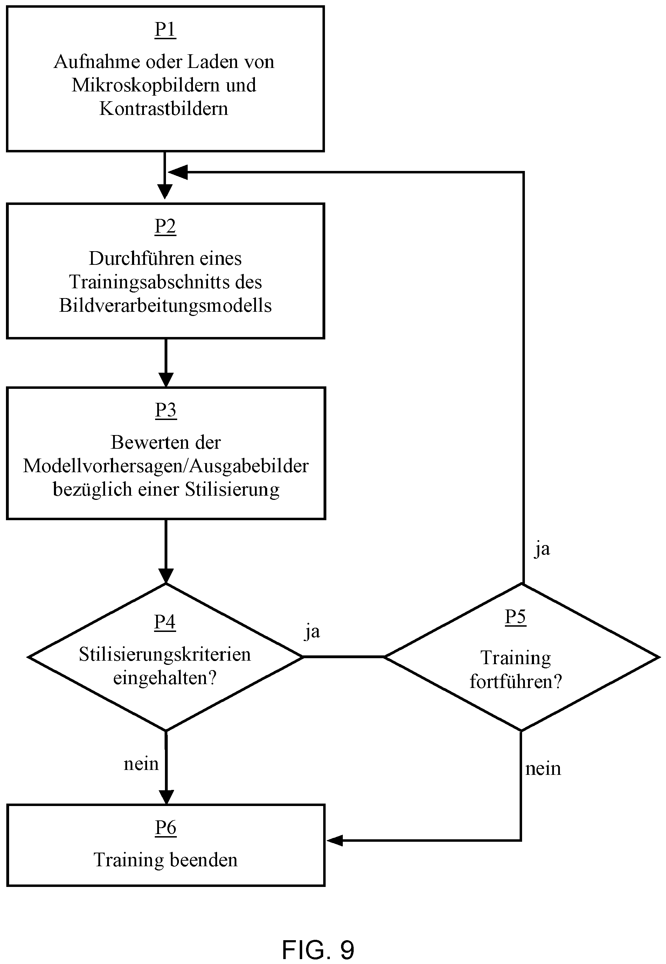

Ein beispielhafter Ablauf von Prozessen eines Verfahrens der Erfindung ist schematisch in FIG. 9 gezeigt.

In Prozess P1 erfolgt mit einem Mikroskop, beispielsweise mit dem Mikroskop aus FIG. 2, eine Aufnahme von Mikroskopbildern und Kontrastbildern, welche Trainingsdaten für ein Training des Bildverarbeitungsmodells bilden. Alternativ können bereits vorhandene Mikroskop- und Kontrastbilder aus einem Speicher geladen werden, um die Trainingsdaten zu bilden.

In Prozess P2 wird ein Trainingsabschnitt des Bildverarbeitungsmodells mit Hilfe der Trainingsdaten durchgeführt. Ein Trainingsabschnitt bezeichnet einen oder mehrere Trainingsschritte.

Anschließend erfolgt in Prozess P3 eine Bewertung von Ausgabebildern, die mit dem aktuellen Trainingszustand des Bildverarbeitungsmodells berechnet werden, bezüglich einer Stilisierung. Die Bewertung der Stilisierung kann z.B. durch die beschriebenen Stilisierungskriterien erfolgen. Die bewerteten Ausgabebilder können aus Mikroskopbildern der Trainings- oder Validierungsdaten berechnet werden.

In Prozess P4 wird geprüft, ob die Stilisierungskriterien eingehalten sind oder die Ausgabebilder bereits realistisch erscheinen. Werden die Stilisierungskriterien eingehalten, wird in Prozess P5 entschieden, ob das Training fortgeführt werden soll. Hierzu wird beispielsweise die aktuelle Anzahl durchgeführter Trainingsschritte mit einer vorgegebenen Maximalanzahl verglichen. Wird ein Fortführen des Trainings entschieden, folgt erneut Prozess P2, andernfalls wird in Prozess P6 das Training beendet. Die Beendigung des Trainings durch Prozess P6 folgt auch, wenn in Prozess P4 festgestellt wird, dass die Stilisierungskriterien nicht mehr eingehalten sind. Anschließend kann ein Trainingszustand bei Beendigung des Trainings verwendet bzw. ausgewählt werden, um als Bildverarbeitungsmodell zum Erzeugen stilisierter Kontrastbilder zu fungieren. Wurden während des Trainings frühere Trainingszustände, das heißt Modellparameterwerte, gespeichert, so kann auch ein vorhergehender Trainingszustand, mit welchem die Stilisierungskriterien noch eingehalten wurden, ausgewählt werden. Über wenige Trainingsschritte ändert sich das Bildverarbeitungsmodell in der Regel nur in moderatem Umfang, so dass allgemeiner auch Trainingszustände ausgewählt werden können, die kurz vor Trainingsabbruch vorlagen, z.B. deren Anzahl an Trainingsschritten bis 5% oder bis 10% kleiner als die Anzahl an Trainingsschritten bei Trainingsbeendigung ist.

### FIG. 10

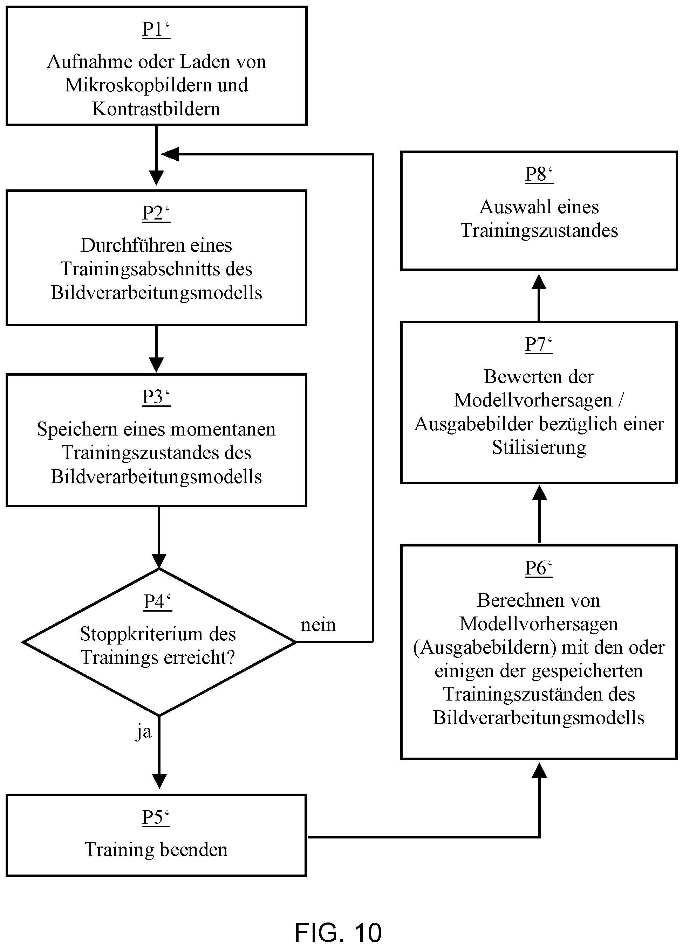

Ein weiterer beispielhafter Ablauf von Prozessen eines Verfahrens der Erfindung ist schematisch in FIG. 10 gezeigt. Während bei FIG. 9 ein Trainingszustand im Bereich des Trainingsendes ausgewählt wird, wird in FIG. 10 ein vollständiges Training, z.B. bis zu einer Konvergenz, durchgeführt und anschließend wird ein für die Stilisierung geeigneter früherer Trainingszustand ermittelt, welcher nicht im Bereich des Trainingsendes liegt.

Zunächst werden in Prozess P1' Mikroskopbilder und Kontrastbilder mit einem Mikroskop aufgenommen oder aus einem Speicher geladen. Sodann wird in Prozess P2' ein Trainingsabschnitt des Bildverarbeitungsmodells durchgeführt. Im folgenden Prozess P3' werden Modellparameterwerte des aktuellen Trainingszustandes gespeichert. Hierauf wird in Prozess P4' geprüft, ob ein Stoppkriterium des Trainings erreicht ist. Das Stoppkriterium kann z.B. eine Konvergenz, eine Maximalanzahl an Trainingsschritten oder einen Verlustwert betreffen. Ein Stoppkriterium kann auch über einen Diskriminator festgelegt sein, welcher entweder ein Ausgabebild oder ein vorgegebenes Kontrastbild erhält und hierzwischen unterscheiden soll. Ist ein Trainingszustand erreicht, in dem berechnete Ausgabebilder den Kontrastbildern so stark ähneln, dass der Diskriminator nicht sicher hierzwischen unterscheiden kann, kann das Training beendet werden. Ist das Stoppkriterium hingegen noch nicht erreicht, folgen wieder die Prozesse P2', P3' und P4'. Wird in P4' festgestellt, dass das Stoppkriterium erreicht ist, wird in Prozess P5' das Training beendet.

Anschließend werden in Prozess P6' mit den gespeicherten Trainingszuständen (oder zumindest mit einigen der gespeicherten Trainingszustände) Ausgabebilder aus Mikroskopbildern berechnet. In jedem der Trainingszustände können dem Bildverarbeitungsmodell dieselben Mikroskopbilder eingegeben werden, damit die berechneten Ausgabebilder besser vergleichbar sind. Die in P6' genutzten Mikroskopbilder können Teil der Validierungsdaten sein, die in P2' nicht genutzt wurden. Die in P6' berechneten Ausgabebilder werden in Prozess P7' bezüglich einer Stilisierung bewertet. Abhängig von der Bewertung der Stilisierung wird in Prozess P8' einer der gespeicherten Trainingszustände ausgewählt. Beispielsweise kann bewertet werden, ob die Ausgabebilder die beschriebenen Stilisierungskriterien erfüllen. Aus mehreren gespeicherten Trainingszuständen, deren Ausgabebilder die Stilisierungskriterien erfüllen, kann der Trainingszustand mit der höchsten Anzahl an durchgeführten Trainingsschritten ausgewählt werden.

Wird ein Training gemäß FIG. 10 durchgeführt, kann zusätzlich zu dem ausgewählten Trainingszustand zum Erzeugen stilisierter Kontrastbilder auch ein Trainingszustand zu Ende des Trainings gespeichert und als Modell zur virtuellen Einfärbung verwendet werden. Dieses Modell erzeugt realistisch erscheinende Bilder. Abhängig von nachfolgenden Analyseschritten kann das stilisierte Kontrastbilder oder das virtuell eingefärbte, echt erscheinende Kontrastbild geeigneter sein.

Während bisher beschriebene Stilisierungskriterien Bildeigenschaften der Ausgabebilder betreffen, kann stattdessen auch aus einer Lernkurve ein geeigneter Trainingszustand ermittelt und ausgewählt werden. Dies wird im Folgenden näher beschrieben.

### FIG. 11

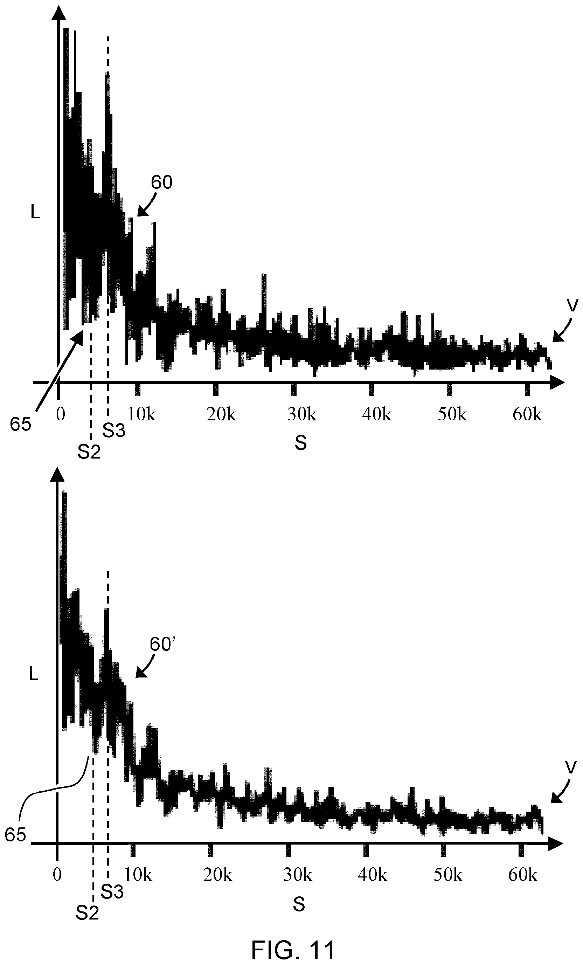

FIG. 11 zeigt oben einen Graphen einer Lernkurve 60 zu einem Training des Bildverarbeitungsmodells. Zudem zeigt FIG. 11 unten eine geglättete Lernkurve 60', welche aus der Lernkurve 60 berechnet ist, indem die Verlustwerte L zu mehreren aufeinanderfolgenden Trainingsschritten gemittelt wurden. Im konkreten Beispiel wurde eine exponentielle Mittelung mit dem Faktor 0,5 durchgeführt, wobei aber auch andere Faktoren oder andere Mittelungsarten möglich sind.

Nach der Anzahl an Trainingsschritten S2 wird ein Trainingszustand erhalten, in dem als Stilisierung geeignete Ausgabebilder berechnet werden können, vergleiche Ausgabebild 30B aus FIG. 6. Nach weiteren Trainingsschritten wird in S3 hingegen ein ungeeigneter Trainingszustand erreicht, vergleiche Ausgabebild 30C aus FIG. 6.

An der Anzahl an Trainingsschritten S2 ist auf der Lernkurve 60, 60' ein lokales Minimum / Optimum 65 erreicht. Daher kann ein Trainingszustand als Bildverarbeitungsmodell zum Berechnen stilisierter Kontrastbilder ausgewählt werden, indem aus der geglätteten Lernkurve 60' ein erstes lokales Minimum 65 ermittelt wird. Optional kann festgelegt werden, dass es sich um das erste lokale Minimum 65 nach einer Mindestanzahl an Trainingsschritten handeln soll, wobei die Mindestanzahl variabel festlegbar ist, beispielsweise abhängig von einer Lernrate, und/oder auf einen Wert zwischen 100 und 1000 festgelegt wird. Alternativ oder zusätzlich kann auch gefordert werden, dass eine vorgegebene Obergrenze für den Verlustwert L eingehalten sein muss, damit ein Trainingszustand im Bereich eines lokalen Minimums ausgewählt wird. Ist der Verlustwert L am ermittelten lokalen Minimum größer als die Obergrenze, wird ein darauffolgendes lokales Minimum gesucht. Liegt dessen Verlustwert unterhalb der Obergrenze, wird ein Trainingszustand an diesem lokalen Minimum ausgewählt.

Die Auswertung der Lernkurve 60 kann während des laufenden Trainingsvorgangs V erfolgen oder alternativ nach Beendigung des Trainings. Prinzipiell kann die Lernkurve 60 entweder anhand von Trainingsdaten oder Validierungsdaten berechnet werden.

Erfolgt die Auswertung der Lernkurve 60 während dem laufenden Trainingsvorgang, bietet sich als Kriterium zum Auswählen eines Trainingszustandes auch eine Ermittlung eines ersten sprunghaften Abfalls des Verlustwertes L an. Der Grund hierfür ist, dass im Training relativ schnell gelernt wird, eine Lage größerer Objekte wie der Zellen 21 nachzubilden, wobei für die Zellen ein weitgehend konstanter Helligkeitswert vorhergesagt wird. Wird daher festgestellt, dass über eine vorgegebene Anzahl an Trainingsschritten hinweg eine Verringerung des Verlustwerts um mindestens einen vorgegebenen Wert eingetreten ist, ist es wahrscheinlich, dass ein Trainingszustand im Bereich des ersten lokalen Minimums, bei S2, erreicht ist. Optional kann wiederum als zusätzliches Kriterium ein Ablauf einer Mindestanzahl an Trainingsschritten ergänzt werden. Diese Auswertungen bieten den Vorteil, dass das Training nicht weit über das erste lokale Minimum hinaus oder bis zur Konvergenz fortgeführt werden braucht, um einen geeigneten früheren Trainingszustand ermitteln zu können. Dies kann eine wesentliche Zeitersparnis gegenüber dem Training eines herkömmlichen Virtual Staining Models bedeuten.

Die in FIG. 11 gezeigten Lernkurven 60 und 60' wurden im Training eines Bildverarbeitungsmodells erhalten, welches durch ein später näher beschriebenes cGAN gebildet ist. Die Lernkurven 60, 60' beziehen sich auf den Gesamtverlust (total loss) der Verlustfunktion des Generators des cGAN. Als Lernkurve kann auch eine andere im Training verwendete Verlustfunktion oder ein anderes Maß für eine Abweichung oder Übereinstimmung zwischen berechneten Ausgabebildern und vorgegebenen Zielbildern dienen. Beispielsweise kann die betragsweise addierte/gemittelte pixelweise Abweichung zwischen Ausgabebildern und Zielbildern (L1-Norm) verwendet werden, oder es kann die quadrierte pixelweise Abweichung zwischen Ausgabebildern und Zielbildern (L2-Norm) genutzt werden. Qualitativ entsprechen die Verläufe solcher Lernkurven den Verläufen der in FIG. 11 gezeigten Lernkurven.

Wird als Lernkurve ein Maß für die Übereinstimmung zwischen Ausgabebildern und Zielbildern verwendet, so steigt die Lernkurve über den Trainingsverlauf, im Gegensatz zu den gezeigten, im Wesentlichen fallenden Lernkurven, die ein Maß für eine Abweichung zwischen Ausgabebildern und Zielbildern darstellen. Das beschriebene erste lokale Optimum 65 an der Schrittzahl S2 ist bei einer Lernkurve, die eine Übereinstimmung erfasst, ein erstes lokales Maximum. Diesem folgt ein lokales Minimum (kein Maximum) an der Schrittzahl S3. Auch die übrigen Aussagen sind entsprechend umgekehrt, insbesondere kommt es im Bereich zur Schrittzahl S2 hin zu einem sprunghaften Anstieg anstelle eines sprunghaften Abfalls wie in den gezeigten Lernkurven 60, 60'. Als Lernkurve kann auch ein Diskriminator-Loss verwendet werden, welcher angibt, wie treffsicher ein Diskriminator eines cGAN zwischen einem Bildpaar, welches ein Mikroskopbild und ein zugehöriges Zielbild umfasst, und einem Bildpaar, welches ein Mikroskopbild und ein hieraus berechnetes Ausgabebild umfasst, unterscheiden kann. In dieser Verlustfunktion können ebenfalls aufeinanderfolgende Ausschläge im Bereich der Schrittzahlen S2 und S3 beobachtet werden.

Die zuvor beschriebenen Ausführungsvarianten, insbesondere der Figuren 9 und 10, können dadurch abgewandelt werden, dass anstelle von Stilisierungskriterien bezüglich der Ausgabebilder eine Auswertung der Lernkurve erfolgt, um einen Trainingszustand auszuwählen.

Außerdem können die zu den verschiedenen Figuren beschriebenen Varianten miteinander kombiniert werden. Insbesondere können sowohl eine Auswertung der Lernkurve als auch ein Stilisierungskriterium bezüglich der Ausgabebilder verwendet werden, um einen Trainingszustand auszuwählen. Beispielsweise kann durch mehrere Methoden jeweils eine Anzahl an Trainingsschritten eines als geeignet eingestuften Trainingszustandes ermittelt werden; anschließend wird der Durchschnitt dieser Anzahlen an Trainingsschritten berechnet und der entsprechende Trainingszustand ausgewählt. Wiederum weitere Abwandlungen verwenden eine Nutzereingabe zur Auswahl eines Trainingszustandes, wie im allgemeinen Beschreibungsteil erläutert.

### FIG. 12

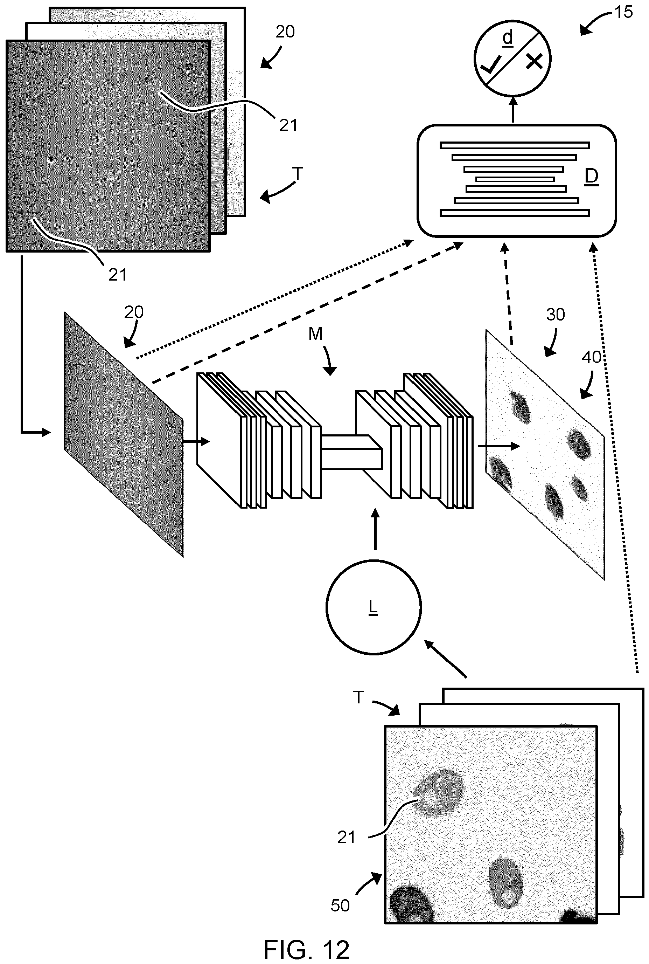

FIG. 12 veranschaulicht eine weitere Ausführungsvariante eines erfindungsgemäßen Verfahrens, um ein Bildverarbeitungsmodell M zu trainieren, welches aus einem Mikroskopbild 20 ein stilisiertes Kontrastbild 40 berechnen kann. Es handelt sich um eine Abwandlung des Beispiels aus FIG. 4, welches um ein adversielles Loss ergänzt ist. Hierdurch wird ein cGAN realisiert (cGAN: conditional generative adversarial networks; konditionelles generatives gegnerisches Netzwerk).

Das Bildverarbeitungsmodell M stellt einen Generator dar, der zusammen mit einem Diskriminator D trainiert wird. Der Diskriminator D erhält ein Bildpaar als Eingabe, nämlich entweder ein Mikroskopbild 20 zusammen mit dem zugehörigen Kontrastbild 50 (gepunktete Linien in FIG. 12) oder das Mikroskopbild 20 zusammen mit dem berechneten Ausgabebild 30 (gestrichelte Linien in FIG. 12). Der Diskriminator D gibt ein Diskriminationsergebnis d aus, welches angibt, ob der Diskriminator D schätzt, dass das eingegebene Bildpaar das Kontrastbild 50 oder das Ausgabebild 30 umfasst.

In der Zielfunktion des Diskriminators D wird eine korrekte Einstufung belohnt bzw. eine falsche Einstufung bestraft. Die Zielfunktion des Diskriminators D wird dazu optimiert, möglichst immer korrekte Einstufungen vorzunehmen. Die Verlustfunktion L des Bildverarbeitungsmodells M umfasst die Zielfunktion des Diskriminators D und wird dazu optimiert, den Diskriminator D zu täuschen. Eine Architektur des Bildverarbeitungsmodells M kann z.B. ein U-Netz oder eine andere Art eines CNN sein.

Ein wie in FIG. 12 gestaltetes Netz wurde zum Berechnen der Ausgabebilder von FIG. 6 verwendet.

### FIG. 13

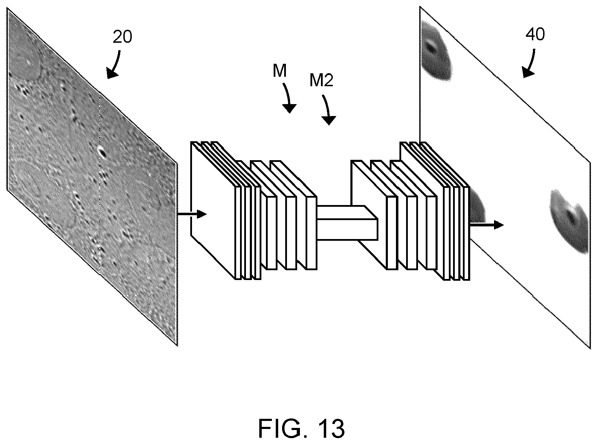

FIG. 13 zeigt schematisch eine Anwendung des Bildverarbeitungsmodells M im Trainingszustand M2 in der Inferenz, nach Abschluss des Trainings.

Aus einem eingegebenen Mikroskopbild bzw. Phasenkontrastbild 20, welches nicht Teil der Trainingsdaten war, berechnet das Bildverarbeitungsmodell M ein stilisiertes Kontrastbild 40. In dem stilisierten Kontrastbild 40 sind biologische Zellen örtlich korrekt wiedergegeben, ohne dass Strukturen der Zellen hinzuerfunden wurden.

Optional kann eine automatische Nachverarbeitung zur weiteren Stilisierung erfolgen. Beispielsweise können Ecken oder Kanten gefunden und geglättet oder weichgezeichnet werden. Auch kann das gesamte Bild durch z.B. einen Gauß-Filter schärfenreduziert werden oder pixeliert werden, das heißt jeweils mehrere nebeneinander liegende Pixel erhalten denselben Pixelwert, z.B. den Durchschnittswert der beteiligten Pixel.

Die beschriebenen Ausführungsbeispiele sind rein illustrativ und Abwandlungen hiervon sind im Rahmen der beigefügten Ansprüche möglich.

### Bezugszeichenliste

- 1: Mikroskop
- 2: Stativ
- 3: Objektivrevolver
- 4: (Mikroskop-)objektiv
- 5: Beleuchtungseinrichtung
- 6: Probentisch
- 7: Probenträger
- 8: Mikroskopkamera
- 9: Übersichtskamera
- 9A: Sichtfeld der Übersichtskamera
- 9B: Spiegel
- 10: Recheneinrichtung
- 11: Computerprogramm
- 12: berührungsempfindlicher Bildschirm
- 15: Training
- 20: Mikroskopbild / Phasenkontrastbild
- 20A: eingegebenes Mikroskopbild
- 21: Probenstrukturen (biologische Zelle) im Mikroskopbild
- 22: Probendetails, von einem maschinell gelernten Modell hinzuerfunden
- 25: Zellkern
- 30, 30A-30F: Ausgabebild
- 31: Probenstrukturen im Ausgabebild
- 32: Bildbereich eines Ausgabebildes, in dem Probenstrukturen fehlen
- 33: Strukturdetails im Ausgabebild, die hinzuerfinden wurden
- 35: Zellkern im Ausgabebild
- 40: stilisiertes Kontrastbild
- 50: Kontrastbild / Fluoreszenzbild / Zielbild im Training des Bildverarbeitungsmodells
- 51: Bildbereich eines Kontrastbildes, in dem fehlerhafterweise keine Probenstruktur dargestellt ist
- 60: Lernkurve
- 60': gemittelte/geglättete Lernkurve
- 65: erstes lokales Minimum / Optimum der Lernkurve 60, 60'
- 70, 70A: berechnetes Kontrastbild / virtuell eingefärbtes Bild
- 100: Mikroskopiesystem
- B: Pixelwert eines Ausgabebildes
- B0: Minimaler Pixelwert
- B1: Pixelwert, welcher die Aufspreizung W₀ begrenzt
- C: Konvergenz der Verlustfunktion bzw. des Trainingsverlaufs
- D: Diskriminator
- d: Diskriminationsergebnis des Diskriminators
- F0: Vorgegebener Frequenzbereich in Fourier-Spektren
- FB: Fourier-Spektrum des Ausgabebildes 30B
- FH: Fourier-Spektrum des Ausgabebildes 30H
- H: Häufigkeit der Pixelwerte eines Ausgabebildes
- HB, HF: Helligkeitsverteilungen der Ausgabebilder 30B, 30F
- I0: Signalstärkenobergrenzen
- IB, IH: Signalstärken höherfrequenter Anteile der Fourier-Spektren FB, FH
- K1, K2: Stilisierungskriterien
- L: Verlustfunktion, Verlustwert
- M: Bildverarbeitungsmodell
- M': herkömmliches Modell zum virtuellen Einfärben eines Bilds
- P1-P6: Prozesse eines Ausführungsbeispiels eines Verfahrens der Erfindung
- P1 '-P8': Prozesse eines Ausführungsbeispiels eines Verfahrens der Erfindung
- S: Trainingsschritte
- S1-S6: Anzahl an Trainingsschritten
- T: Trainingsdaten zum Lernen des Bildverarbeitungsmodells M
- T': Trainingsdaten eines herkömmlichen Modells M'
- V: Trainingsverlauf
- W₀: Maximal erlaubte Aufspreizung der Helligkeitsverteilung
- W_{HB}: Breite der Helligkeitsverteilung HB
- W_{HF}: Breite der Helligkeitsverteilung HF

## Patentansprüche

1. Ein computerimplementiertes Verfahren zum Erzeugen stilisierter Kontrastbilder (40) aus Mikroskopbildern (20) mit Hilfe eines Bildverarbeitungsmodells (M),
wobei zunächst in einem Training (15) Modellparameter des Bildverarbeitungsmodells (M) anhand von Trainingsdaten (T) angepasst werden, welche Mikroskopbilder (20) als Eingabedaten und Kontrastbilder (50) als Zieldaten umfassen, wobei die Mikroskopbilder (20) und die Kontrastbilder (50) durch verschiedene Mikroskopietechniken erzeugt sind;
**dadurch gekennzeichnet,**
**dass** ein Trainingszustand (M2) des Bildverarbeitungsmodells (M) ausgewählt wird, welcher nach mehreren Trainingsschritten (S) und vor einer Konvergenz (C) oder einem globalen Optimum eines Trainingsverlaufs (V) erreicht ist und eine detailreduzierte Nachbildung eines Kontrastbildes (50) ermöglicht,
**dass** das Bildverarbeitungsmodell (M) in dem ausgewählten Trainingszustand (M2) verwendet wird, um aus einem eingegebenen Mikroskopbild (20) ein stilisiertes Kontrastbild (40) zu erzeugen.

2. Das computerimplementierte Verfahren nach vorstehendem Anspruch,
wobei zum Auswählen des Trainingszustands (M2) eine Bewertung von Ausgabebildern (30A-30F), die vom Bildverarbeitungsmodell (M) in verschiedenen Trainingszuständen (M1-M6) erzeugt werden, hinsichtlich vorgegebener Stilisierungskriterien (K1, K2) erfolgt.

3. Das computerimplementierte Verfahren nach dem unmittelbar vorstehenden Anspruch,
wobei die Stilisierungskriterien (K1) eine Helligkeitsverteilung (HB, HF) von Pixeln der Ausgabebilder (30A-30F) betreffen und unterscheiden, ob die Helligkeitsverteilung (HB, HF) innerhalb einer vorgegebenen Aufspreizung (W₀) bleibt, oder
wobei die Stilisierungskriterien einen Unterschied zwischen einer Helligkeitsverteilung (HB, HF) von Pixeln eines Ausgabebildes (30A-30F) zu einer Helligkeitsverteilung von Pixeln eines zugehörigen Zielbildes (50) bewerten.

4. Das computerimplementierte Verfahren nach Anspruch 2 oder 3,
wobei die Stilisierungskriterien (K2) eine Aufweitung von Fourier-Spektren (FB, FF) von Ausgabebildern (30A-30F) betreffen und wobei die Stilisierungskriterien (K2) unterscheiden, ob Signalstärken (IB, IF) der Fourier-Spektren (FB, FF) oberhalb eines vorgegebenen Frequenzbereichs (F0) vorgegebene Signalstärkenobergrenzen (I0) einhalten, wobei der vorgegebene Frequenzbereich (F0) entweder unabhängig von den Trainingsdaten (T) konstant vorgegeben ist, oder anhand der Kontrastbilder (50) festgelegt wird oder anhand von Vorwissen über dargestellte Objekte festgelegt wird.

5. Das computerimplementierte Verfahren nach einem der Ansprüche 2 bis 4, wobei das Training (15) des Bildverarbeitungsmodells (M) beendet wird, sobald die vorgegebenen Stilisierungskriterien (K1, K2) nicht länger erfüllt sind; und wobei ein Trainingszustand (M2) im Bereich des Trainingsendes ausgewählt wird.

6. Das computerimplementierte Verfahren nach einem der Ansprüche 1 bis 4, wobei durch einen Algorithmus eine durchzuführende Anzahl an Trainingsschritten (S) festgelegt wird, wobei der Algorithmus die Anzahl abhängig von einem Umfang vorhandener Trainingsdaten (T) festlegt und umso größer wählt, je größer der Umfang vorhandener Trainingsdaten (T) ist; und wobei der Algorithmus die Anzahl abhängig von einer vorgegebenen Referenzanzahl an Trainingsschritten (S) festlegt, nach welcher eine Konvergenz (C) erwartet wird, wobei der Algorithmus die durchzuführende Anzahl an Trainingsschritten (S) auf einen Wert festlegt, der höchstens 25% der Referenzanzahl beträgt;
wobei die vorgegebene Referenzanzahl an Trainingsschritten (S) durch einen Nutzer eingebbar ist oder durch den Algorithmus aus Daten über frühere Trainingsvorgänge ermittelt wird.

7. Das computerimplementierte Verfahren nach einem der vorstehenden Ansprüche,
wobei während des Trainings (15) eine Lernkurve (60) erfasst wird und abhängig von einem Verlauf der Lernkurve (60) ein Trainingszustand (M2) ausgewählt wird, an dem noch keine Konvergenz (C) und kein globales Optimum erreicht ist.

8. Das computerimplementierte Verfahren nach einem der vorstehenden Ansprüche,
wobei aus einer Lernkurve (60) durch Mittelung mehrerer aufeinanderfolgender Werte eine geglättete Lernkurve (60') berechnet wird,
wobei ein Trainingszustand (M2) ausgewählt wird, welcher auf der geglätteten Lernkurve (60') einem Punkt im Bereich eines ersten lokalen Optimums (65) entspricht.

9. Das computerimplementierte Verfahren nach einem der Ansprüche 1 bis 7,
wobei während des Trainings (15) eine Lernkurve (60) erfasst wird und das Training (15) beendet wird, sobald über mehrere aufeinanderfolgende Trainingsschritte (S) in der Lernkurve (60) eine Fehlerreduzierung eintritt, die stärker als ein vorgegebener Schwellwert ist; und
wobei ein Trainingszustand (M2) beim Beenden des Trainings (15) ausgewählt wird, um aus einem eingegebenen Mikroskopbild (20) ein stilisiertes Kontrastbild (40) zu erzeugen.

10. Das computerimplementierte Verfahren nach einem der Ansprüche 1 bis 4, 6, 7 und 8,
wobei das Training (15) des Bildverarbeitungsmodells (M) bis zu einem Stoppkriterium durchgeführt wird;
wobei Trainingszustände (M1-M6) während des Trainingsverlaufs (V) gespeichert werden;
wobei das Bildverarbeitungsmodell (M) in mehreren der gespeicherten Trainingszustände (M1-M6) verwendet wird, um jeweils aus Mikroskopbildern (20) von Validierungsdaten Ausgabebilder (30) zu berechnen; und
wobei einer der gespeicherten Trainingszustände (M1-M6) anhand dieser Ausgabebilder (30) oder einer zugehörigen Lernkurve (60) ausgewählt wird.

11. Das computerimplementierte Verfahren nach einem der vorstehenden Ansprüche,
wobei allein Ausgabebilder (30A-30E), die mit Trainingszuständen (M1-M5) eines initialen Trainingsabschnitts berechnet sind, ausgewertet werden, um einen der Trainingszustände (M1-M5) auszuwählen.

12. Das computerimplementierte Verfahren nach dem unmittelbar vorstehenden Anspruch
wobei anhand der Ausgabebilder (30A-30E), die mit Trainingszuständen (M1-M5) des initialen Trainingsabschnitts berechnet sind, ermittelt wird, in welcher Phase im Trainingsverlauf (V) eine stärkste Änderung von Modellvorhersagen eingetreten ist, und wobei ein Trainingszustand (M2) im Bereich dieser Phase ausgewählt wird.

13. Das computerimplementierte Verfahren nach einem der vorstehenden Ansprüche,
wobei zum Auswählen des Trainingszustands (M2) mehrere Ausgabebilder (30A-30F), die das Bildverarbeitungsmodell (M) in verschiedenen Trainingszuständen (M1-M6) berechnet, einem Nutzer angezeigt werden, und
wobei dem Nutzer eine Auswahlmöglichkeit bereitgestellt wird, durch welche der Nutzer einen der verschiedenen Trainingszustände (M1-M6) über die zugehörigen Ausgabebilder (30A-30F) auswählen kann.

14. Ein Mikroskopiesystem mit
einem Mikroskop (1) zur Bildaufnahme; und
einer Recheneinrichtung (10), die dazu eingerichtet ist, das computerimplementierte Verfahren nach einem der vorstehenden Ansprüche auszuführen.

15. Ein Computerprogramm, umfassend Befehle, die bei der Ausführung des Programms durch einen Computer diesen veranlassen, das Verfahren nach einem der Ansprüche 1 bis 13 auszuführen.
